# EUROPEAN PATENT APPLICATION

(11) **EP 4 636 003 A1**
(43) Date of publication of application: **22.10.2025**
(21) Application number: 25170879.8
(22) Date of filing: 16.04.2025
(51) Int. Cl.: C08G 18/40, C08G 18/48, C08G 18/63, C08G 18/76, C08G 18/08, C08G 18/71

(54) **POLYMER POLYOLS, PROCESSES FOR THEIR PREPARATION, AND THE USE THEREOF TO PRODUCE POLYURETHANE FOAMS**

(30) Priority: 18.04.2024 US 202463635714 P
(71) Applicant: Covestro LLC, Pittsburgh, PA 15205-9741 (US)
(72) Inventor: HAYES, John, Gibsonia, 15044-6053 (US); ADKINS, Rick, Hurricane, 15317 (US); FORTNEY, Andria, Pittsburgh, 15226 (US)
(74) Representative: Levpat

(57) **Abstract**

Polymer polyols ("PMPOs"), processes for their production, and the use of such PMPOs, particularly in the production of flexible polyurethane foams. The PMPOs are produced using an ethylenically unsaturated composition that includes tertiary amino group-containing ethylenically unsaturated compound.

## Description

### FIELD

This specification pertains to polymer polyols ("PMPOs"), processes for their production, and to their use, particularly in producing flexible polyurethane foams. The PMPOs include polymer particles that comprise a reaction product of an ethylenically unsaturated composition that includes an ethylenically unsaturated compound having a (cyclo)aliphatic moiety with a tertiary amino group.

### BACKGROUND

PMPOs are dispersions of polymer particles in a polyol that is often referred to as a base polyol and are used to prepare polyurethane foams, such as slabstock and molded flexible polyurethane foams. Slabstock flexible polyurethane foams are commonly used in carpet, furniture and bedding applications, while molded flexible polyurethane foams are commonly used in automotive applications. These flexible polyurethane foams are produced by reacting the PMPO with a polyisocyanate in the presence of a blowing agent and other ingredients, such as a tertiary amine catalyst. PMPOs can often produce foams with higher hardness levels than a conventional, unmodified, polyol can produce.

Polyurethane foam formulations often employ relatively low molecular weight tertiary amine catalysts, such as, for example, bis(2-dimethylaminoethyl) ether, that can be emitted from the foam. During production of slabstock flexible polyurethane foam of relatively higher density (utilizing reduced content of water as blowing agent), for example, the exothermic conditions experienced during foam formation may not be sufficient to volatize such tertiary amine catalyst, resulting in the catalyst remaining present in the foam. It may thereafter volatilize and be emitted to the atmosphere.

A challenge related to PMPOs, particularly those of desirably high solids content, is viscosity. The viscosity of a PMPO should be sufficiently low for ease of handling during its manufacture. In addition, the viscosity should facilitate transport, handling and, ultimately, adequate processability, in the employed foam processing equipment, in which excessive PMPO viscosity can be a significant problem.

### SUMMARY

Inventions described in this specification relate to PMPOs that can be used in the production of flexible polyurethane foams, such as slabstock flexible polyurethane foams, in which the PMPO itself exhibits catalytic activity, thereby enabling foam formulators to reduce the content of potentially volatile tertiary amine catalysts in the foam formulation without detrimentally impacting the reactivity of the foam formulation. The PMPOs also maintain a sufficiently high solids content and sufficiently low viscosity to be commercially viable.

In some respect, the PMPOs comprise: (a) a base polyol having a hydroxyl functionality of 2 to 8 and an OH number of 20 to 400 mg KOH/g polyol; and (b) polymer particles dispersed in the base polyol. The polymer particles comprise a reaction product of a reaction mixture comprising an ethylenically unsaturated composition, the ethylenically unsaturated composition comprising an ethylenically unsaturated compound of the general structure (I):

Y-X-Z (I)

in which: (1) Y represents a moiety that comprises ethylenic unsaturation; (2) X represents oxygen or NH; and (3) Z represents a (cyclo)aliphatic moiety that comprises a tertiary amino group.

In other respects, the PMPOs comprise: (a) a base polyol having a hydroxyl functionality of 2 to 8 and an OH number of 20 to 400 mg KOH/g polyol; and (b) polymer particles dispersed in the base polyol. The polymer particles comprise a reaction product of a reaction mixture comprising an ethylenically unsaturated composition that comprises an ethylenically unsaturated reaction product of reactants comprising: (i) a hydroxyl and/or primary amine-containing (cyclo)aliphatic compound having at least one tertiary amino group; and (ii) an ethylenically unsaturated compound comprising at least one group reactive with the hydroxyl and/or primary amine group of (i).

This specification also relates to, *inter alia*, processes for producing such PMPOs, polyurethane foam-forming compositions that include such PMPOs, polyurethane foams produced from such foam-forming compositions, and methods for producing such polyurethane foams.

### BRIEF DESCRIPTION OF THE DRAWINGS

FIG. 1 is a graph of Max Rise Rate (in/sec) vs. Total Added Catalyst for Foam Examples 12-23; and
FIG. 2 is a graph of Max Rise Rate (in/sec) vs. Catalyst #1 level for foam Examples 12-23.

### DETAILED DESCRIPTION

Various implementations are described and illustrated in this specification to provide an overall understanding of the structure, function, properties, and use of the disclosed inventions. It is understood that the various implementations described and illustrated in this specification are non-limiting and non-exhaustive. Thus, the invention is not limited by the description of the various non-limiting and non-exhaustive implementations disclosed in this specification. The features and characteristics described in connection with various implementations may be combined with the features and characteristics of other implementations. Such modifications and variations are intended to be included within the scope of this specification. As such, the claims may be amended to recite any features or characteristics expressly or inherently described in, or otherwise expressly or inherently supported by, this specification. Further, Applicant(s) reserve the right to amend the claims to affirmatively disclaim features or characteristics that may be present in the prior art. Therefore, any such amendments comply with the requirements of 35 U.S.C. § 112 and 35 U.S.C. § 132(a). The various implementations disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant(s) reserves the right to amend this specification to expressly recite any subject matter, or portion thereof, incorporated by reference herein.

In this specification, other than where otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described in the present description should at least be construed in light of the number of reported significant digits and by applying ordinary rounding techniques.

Also, any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant(s) reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. § 112 and 35 U.S.C. § 132(a).

The grammatical articles "one", "a", "an", and "the", as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described implementations. Further, the use of a singular noun includes the plural, and the use of a plural noun includes the singular, unless the context of the usage requires otherwise.

As used herein, the term "functionality", when used with reference to a -OH functional material, refers to the average number of reactive hydroxyl groups (-OH) present per molecule of the -OH functional material being described. The term "hydroxyl number" or "OH number" of a polyol refers to the number of reactive hydroxyl groups available for reaction, and is expressed as the number of milligrams of potassium hydroxide equivalent to the hydroxyl content of one gram of the polyol (ASTM D4274-16). The term "equivalent weight" refers to the weight of a compound divided by its valence. For a polyol, the equivalent weight is the weight of the polyol that will combine with an isocyanate group, and may be calculated by dividing the molecular weight of the polyol by its functionality. The equivalent weight of a polyol may also be calculated by dividing 56,100 by the hydroxyl number of the polyol - Equivalent Weight (g/eq) = (56.1 x 1000)/OH number.

As used herein, "monomer" means the simple unpolymerized form of a chemical compound having relatively low molecular weight, e.g., acrylonitrile, styrene, methyl methacrylate, and the like.

As used herein, "ethylenically unsaturated compound" means a compound containing ethylenic unsaturation (C=C, *i.e.,* two double bonded carbon atoms) that can undergo free radically induced addition polymerization reactions.

As used herein, "pre-formed stabilizer" means an intermediate obtained by reacting a macromer containing reactive unsaturation (such as a (meth)acrylate, or maleate) with one or more monomers (such as acrylonitrile, styrene or methyl (meth)acrylate), with and at least one free radical initiator, in the presence of a polymer control agent (PCA) and, optionally, in a diluent, to give a copolymer (*i.e.* a dispersion having a relatively low solids content (such as <30%), or soluble grafts, etc.).

As used herein "viscosity" is in millipascal-seconds (mPa·s) measured at 25°C on an Anton Paar SVM3000 viscometer.

As used herein, "(meth)acrylate" encompasses both acrylates and methacrylates.

As used herein, "(cyclo)aliphatic" encompasses both aliphatics and cycloaliphatics.

As indicated, certain implementations of the present specification are directed to PMPOs that comprise a dispersion of polymer particles in a polyol, the polyol sometimes being referred to as a base polyol. In some embodiments, the PMPOs are sometimes characterized by a solids content, *i.e.*, content of polymer particles, of 30% by weight to 75% by weight, such as 35% by weight to 70% by weight, 40% by weight to 60% by weight, or 45% by weight to 55% by weight, based on the total weight of the PMPO. Moreover, in some implementations, the PMPO has a viscosity (as defined above) of less than 50,000 mPa·s, less than 40,000 mPa·s, less than 30,000 mPa·s, less than 20,000 mPa·s or, in some cases, less than 10,000 mPa·s.

Suitable base polyols include, for example, polyether polyols with a functionality of 2 to 8, 2 to 6, or 3 to 6, and an OH number of 20 to 400 mg KOH/g, 20 to 200 mg KOH/g, 20 to 150 mg KOH/g, 20 to 100 mg KOH/g, 20 to 60 mg KOH/g, 25 to 60 mg KOH/g, or 30 to 60 mg KOH/g.

Specific examples of suitable base polyols include polyoxyethylene glycols, polyoxyethylene triols, polyoxyethylene tetrols and higher functionality polyoxyethylene polyols, polyoxypropylene glycols, polyoxypropylene triols, polyoxypropylene tetrols and higher functionality polypropylene polyols, mixtures thereof. When mixtures as used, the ethylene oxide and propylene oxide may be added simultaneously or sequentially to provide internal blocks, terminal blocks or random distribution of the oxyethylene groups and/or oxypropylene groups in the polyol. Suitable starters or initiators for these polyols include, for example, ethylene glycol, propylene glycol, diethylene glycol, dipropylene glycol, tripropylene glycol, trimethylolpropane, glycerol, pentaerythritol, sorbitol, sucrose, ethylenediamine, and toluene diamine, among others, including mixtures of any two or more thereof. The alkoxylation reaction may be catalyzed using any conventional catalyst including, for example, potassium hydroxide (KOH) or a double metal cyanide (DMC) catalyst. In some cases, the base polyol comprises a polyether polyol having an internal propylene oxide or mixed propylene oxide/ethylene oxide block and terminal ethylene oxide blocks, i.e., an ethylene oxide cap, such as where ethylene oxide is used in an amount of 10 to 30% by weight, based on total weight of alkylene oxide used to prepare the polyether polyol.

Other suitable polyols for the base polyol of the PMPOs described herein include alkylene oxide adducts of non-reducing sugars and sugar derivatives, alkylene oxide adducts of phosphorus and polyphosphorus acids, alkylene oxide adducts of polyphenols, polyols prepared from natural oils such as, for example, castor oil, and alkylene oxide adducts of polyhydroxyalkanes other than those described above.

Illustrative alkylene oxide adducts of polyhydroxyalkanes include, for example, alkylene oxide adducts of 1,3-dihydroxypropane, 1,3-dihydroxybutane, 1,4-dihydroxybutane, 1,4-, 1,5- and 1,6-dihydroxyhexane, 1,2-, 1,3-, 1,4-1,6- and 1,8-dihydroxyoctant, 1,10-dihydroxydecane, glycerol, 1,2,4-tirhydroxybutane, 1,2,6-trihydroxyhexane, 1,1,1-trimethyl-olethane, 1,1,1-trimethylolpropane, pentaerythritol, caprolactone, polycaprolactone, xylitol, arabitol, sorbitol, and mannitol, among others, includes mixtures of any two or more thereof.

Other polyols which can be employed include the alkylene oxide adducts of non-reducing sugars, wherein the alkoxides have from 2 to 4 carbon atoms. Non-reducing sugars and sugar derivatives include sucrose, alkyl glycosides, such as methyl glycoside and ethyl glucoside, glycol glucosides, such as ethylene glycol glycoside, propylene glycol glucoside, glycerol glucoside, and 1,2,6-hexanetriol glucoside, as well as alkylene oxide adducts of the alkyl glycosides.

Other suitable base polyols include polyphenols, such as the alkylene oxide adducts thereof, wherein the alkylene oxides have, for examples, 2 to 4 carbon atoms. Suitable polyphenols include, for example, bisphenol A, bisphenol F, condensation products of phenol and formaldehyde, novolac resins, condensation products of various phenolic compounds and acrolein, including the 1,1,3-tris(hydroxy-phenyl)propanes, condensation products of various phenolic compounds and glyoxal, glutaraldehyde and other dialdehydes, including the 1,1,2,2-tetrakis(hydroxyphenol)ethanes.

Alkylene oxide adducts of phosphorus and polyphosphorus acid are also suitable base polyols, such as where the alkylene oxide includes ethylene oxide, 1,2-epoxy-propane, an epoxybutane, 3-chloro-1,2-epoxypropane, includes mixtures of any two or more thereof, and the acid includes phosphoric acid, phosphorus acid, a polyphosphoric acid, such as tripolyphosphoric acid, a polymetaphosphoric acid, including mixtures of any two or more thereof.

Of course, blends or mixtures of various useful polyols may be used if desired.

The polymer particles in the PMPOs of this specification comprise a free radical polymerization reaction product of an ethylenically unsaturated composition, in which the ethylenically unsaturated composition comprises an ethylenically unsaturated compound of the general structure (I):

Y-X-Z (I)

in which: (1) Y represents a moiety that comprises ethylenic unsaturation; (2) X represents oxygen or NH; and (3) Z represents a (cyclo)aliphatic moiety that comprises a tertiary amino group. For example, in some implementations, Y in structure (I) is 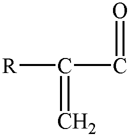 in which R is hydrogen or CH₃, and Z in structure (I) is 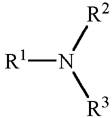 in which R¹ is C₁-C₆ alkylene and R² and R³, which may be the same or different, are each C₁-C₆ alkyl. As a result, in these cases, the ethylenically unsaturated compound of the general structure (I) is of the structure (II): 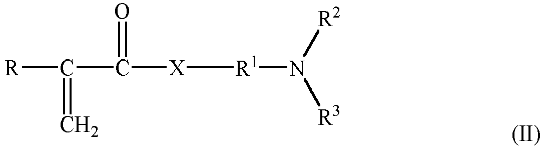 in which: (1) R is hydrogen or CH₃; (2) X is O or NH; (3) R¹ is C₁-C₆ alkylene; and (4) R² and R³, which may be the same or different, are each C₁-C₆ alkyl. Specific examples of such ethylenically unsaturated compounds are dimethylaminoethylmethacrylate (R=CH₃, X=O, R¹=C₂H₄, R²=CH₃, and R³=CH₃) and dimethylaminopropylmethacrylamide (R=CH₃, X=NH, R¹=C₃H₆, R²=CH₃, and R³=CH₃).

In some cases, Z in general structure (I) represents a (cyclo)aliphatic moiety that also contains an ether linkage and/or a secondary amine group. Such ethylenically unsaturated compounds can be prepared by reacting (i) a hydroxyl and/or primary amine-containing (cyclo)aliphatic compound having at least one tertiary amino group with (ii) an ethylenically unsaturated compound comprising at least one group reactive with the hydroxyl and/or primary amine group of (i). As a result, in some implementations of the PMPOs of this specification, the polymer particles comprise a reaction product of an ethylenically unsaturated composition comprising a reaction product of reactants comprising: (i) a hydroxyl and/or primary amine-containing (cyclo)aliphatic compound having at least one tertiary amino group; and (ii) an ethylenically unsaturated compound comprising at least one group reactive with the hydroxyl and/or primary amine group of (i).

Specifically, in some implementations, the hydroxyl and/or primary amine-containing (cyclo)aliphatic compound having at least one tertiary amino group comprises a compound of structure (III): 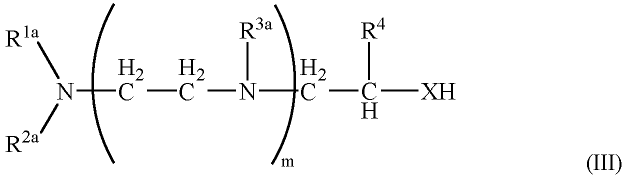 in which: (1) R^{1a}, R^{2a}, and R^{3a}, which may be the same or different, are each a linear or branched alkyl group, such as a linear or branched C₁ to C₄ alkyl group; (2) R⁴ is hydrogen or CH₃; (3) m is an integer having a value of 1 to 3; and (4) X is oxygen or nitrogen; or a compound of structure (IV): 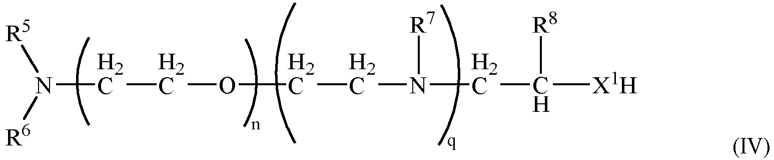 in which: (1) R⁵, R⁶, and R⁷, which may be the same or different, are each a linear or branched alkyl group, such as a linear or branched C₁ to C₄ alkyl group; (2) R⁸ is hydrogen or CH₃; (3) n and q, which may be the same or different, are each an integer having a value of 1 to 3; and (4) X¹ is oxygen or nitrogen; or a combination of a compound of structure (III) and a compound of structure (IV). For example, in some cases, the hydroxyl and/or primary amine-containing (cyclo)aliphatic compound having at least one tertiary amino group comprises a compound of structure (IV) in which R⁵, R⁶, and R⁷ are CH₃, R⁸ is hydrogen, X¹ is oxygen, n is 1, and q is 1.

Other examples of suitable a hydroxyl and/or primary amine-containing (cyclo)aliphatic compounds having at least one tertiary amino group are compounds of formulae (I), (II), (III), (IV) and (V) described at col. 2, lines 31-62 and col. 7, line 49 to col. 9, line 40 of United States Patent No. 10,703,851 B2 and compounds described at [0022]-[0023] of United States Patent Application Publication No. US 2023/0151136 A1, the cited portions of each of which being incorporated herein by reference. In some specific cases, the hydroxyl and/or primary amine-containing (cyclo)aliphatic compound having at least one tertiary amino group comprises: 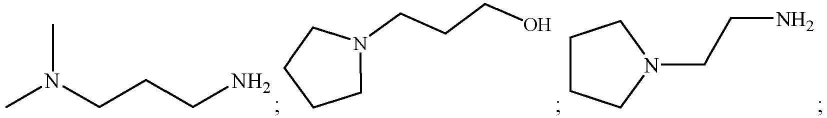 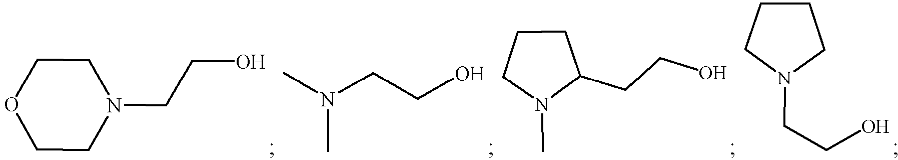 or a combination of any two or more thereof.

Groups reactive with the hydroxyl and/or primary amine group of (i) include, without limitation, isocyanate groups, epoxy groups, and carboxylic acid groups (or derivatives of carboxylic acid groups). Thus, in some implementations, the ethylenically unsaturated compound comprising at least one group reactive with the hydroxyl and/or primary amine group of (i) includes an isocyanate-functional ethylenically unsaturated compound, an oxirane-functional ethylenically unsaturated compound, an ethylenically unsaturated carboxylic acid anhydride, or a combination of any two or more thereof.

Suitable isocyanate-functional ethylenically unsaturated compounds include, without limitation, 3-isopropenyl-α,α-dimethylbenzyl-isocyanate, 4-isopropenyl-α,α-dimethylbenzyl-isocyanate, 2-propenoyl isocyanate, 2-methyl-2-propenoyl isocyanate, allyl isocyanate, methallyl isocyanate, isocyantoethyl (meth)acrylate, isocyanatopropyl (meth)acrylate, isocyanatobutyl (meth)acrylate, or a mixture of any two or more thereof. Other suitable isocyanate-functional ethylenically unsaturated compounds include adducts of (i) a monohydroxy-substituted monofunctional or multifunctional (meth)acrylate, and (ii) a polyisocyanate. Specific examples of suitable monohydroxy-substituted monofunctional and/or multifunctional (meth)acrylates include, without limitation, 2-hydroxyethyl (meth)acrylate, 2-hydroxyethyl 2-chloro acrylate, 2-hydroxyethyl 2-ethylacrylate, 2-hydroxyethyl 2-propylacrylate, 2-hydroxyethyl 2-butylacrylate, 3-hydroxypropyl methacrylate, 3-hydroxypropyl -2-propylacrylate, 2-hydroxypropyl acrylate, 3-hydroxypropyl 2-butylacrylate, 3-hydroxypropyl 2-bromo acrylate, 4-hydroxybutyl acrylate, 4-hydroxybutyl methacrylate, 3-hydroxybutyl 2-ethylacrylate, 4-hydroxybutyl 2-butylacrylate, 2-hydroxybutyl 2-propylacrylate, 4-hydroxybutyl 2-chloro acrylate, bis(methacryloyloxy)propanol, bis(acryloyloxy)propanol, pentaerythritol triacrylate, or a combination of any two or more thereof. Specific examples of suitable polyisocyanates for use in reacting with the monohydroxy-substituted monofunctional and/or multifunctional (meth)acrylate to form the isocyanate-functional ethylenically unsaturated compound include, without limitation, 2,4-tolylene diisocyanate, 2,6-tolylene diisocyanate, 1,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylenebis(4-cyclohexylisocyanate), 2,2,4-trimethylhexamethylene diisocyanate, 2,4,4 trimethylhexamethylene diisocyanate, hexamethylene diisocyanate, bis(2-isocyanato-ethyl)fumarate, 6-isopropyl-1,3-phenyl diisocyanate, 4-diphenylpropane diisocyanate, hydrogenated diphenylmethane diisocyanate, hydrogenated xylylene diisocyanate, tetramethyl xylylene diisocyanate, lysine isocyanate, hexamethylene diisocyanate trimers (such as is commercially available as Desmodur^{®} N3300A from Covestro), triphenylmethane-4,4',4"-triisocyanate (such as is commercially available as Desmodur^{®} RE from Covestro), hexamethylene diisocyanate trimers (such as is commercially available as Desmodur^{®} N3200 from Covestro), aromatic polyisocyanates based on toluene diisocyanate (such as is commercially available as Desmodur^{®} IL BA from Covestro), polyisocyanurates of toluene diisocyanate (such as is commercially available as Desmodur^{®} RC from Covestro), or a combination of any two or more thereof.

Suitable oxirane-functional ethylenically unsaturated compounds include, without limitation, glycidyl (meth)acrylate, allyl glycidylether, vinyl glycidylether, vinyl cyclohexene oxide, limonene oxide, 2-ethylglycidyl(meth)acrylate, 2-(n-propyl)glycidyl(meth)acrylate, 2-(n-butyl)glycidyl(meth)acrylate, dimethylglycidyl methacrylate, glycidylmethylmethacrylate, glycidylacrylate, 2,3-epoxybutyl methacrylate, (3',4'-epoxyheptyl)-2-ethyl(meth)acrylate, (6',7'-epoxyheptyl)(meth)acrylate, allyl-3,4-epoxyheptylether, 6,7-epoxyheptylallylether, vinyl-3,4-epoxyheptylether, 3,4-epoxyheptylvinylether, 6,7-epoxyheptylvinylether, o-vinylbenzylglycidylether, m-vinylbenzylglycidylether, p-vinylbenzylglycidylether, 3-vinyl cyclohexene oxide, α-methyl glycidyl methacrylate, 3,4-epoxycyclohexylmethyl (meth)acrylate, (3-methyloxiran-2-yl) methyl 2-methacrylate, styrene glycidyl ether, 2, 4-vinylphenyl glycidyl ether, or a combination of any two or more thereof.

Suitable ethylenically unsaturated carboxylic acid anhydrides include, without limitation, maleic anhydride, itaconic anhydride; citraconic anhydride; aconitic anhydride; bicyclo[2.2.2]oct-7-ene-2,3,5,6-tetracarboxylic dianhydride; crotonic anhydride;1-cyclopentene-1,2-dicarboxylic anhydride; methacrylic anhydride; as well as combinations of any two or more thereof.

Ethylenically unsaturated compounds of structure (I) can be prepared, for example, by reaction of (i) the hydroxyl and/or primary amine-containing (cyclo)aliphatic compound having at least one tertiary amino group with the (ii) ethylenically unsaturated compound comprising at least one group reactive with the hydroxyl and/or primary amine group of (i) at a temperature of for example, 80°C to 150°C, such as 100°C to 130°C.

In some implementations, the ethylenically unsaturated compound of structure (I) is present in an amount of 0.1 to 10% by weight, such as 0.1 to 5% by weight, 1 to 5% by weight, or 1 to 3% by weight, based on the total weight of the ethylenically unsaturated composition.

Other ethylenically unsaturated compounds suitable for use in the ethylenically unsaturated composition include, for example, other aliphatic conjugated dienes, such as butadiene and isoprene, monovinylidene aromatic monomers, such as styrene, α-methyl-styrene, (t-butyl)styrene, chlorostyrene, cyanostyrene and bromostyrene; α,β-ethylenically unsaturated carboxylic acids and esters thereof, such as acrylic acid, methacrylic acid, methyl (meth)acrylate, ethyl (meth)acrylate, 2-hydroxyethyl (meth)acrylate, butyl (meth)acrylate, itaconic acid, and maleic anhydride, α,β-ethylenically unsaturated nitriles and amides, such as acrylonitrile, methacrylonitrile, acrylamide, methacrylamide, N,N-dimethyl acrylamide, and N-(dimethylaminomethyl)-acrylamide, vinyl esters, such as vinyl acetate, vinyl ethers, vinyl ketones, and vinyl and vinylidene halides, among others. Of course, mixtures of two or more of the aforementioned monomers are also suitable. In some embodiments, the ethylenically unsaturated composition comprises at least one of styrene and its derivatives, acrylonitrile, methyl acrylate, methyl methacrylate, and vinylidene chloride.

In some embodiments, the ethylenically unsaturated composition comprises styrene and acrylonitrile. More specifically, in some implementations, styrene and acrylonitrile are used in sufficient amounts such that the weight ratio of styrene to acrylonitrile (S:AN) is within the range of 80:20 to 20:80, such as 75:25 to 25:75. Moreover, in some implementation, the combination amount of styrene and acrylonitrile in the ethylenically unsaturated composition is of 90 to 99.9% by weight, such as 95 to 99.9% by weight, 95 to 99% by weight, or 97 to 99% by weight, based on the total weight of the ethylenically unsaturated composition.

In addition to the base polyol and the ethylenically unsaturated composition, the reaction mixture used to produce the PMPO may contain other components.

For example, in some implementations, a pre-formed stabilizer is present in the reaction mixture used to produce the PMPO. More specifically, in some implementations, the pre-formed stabilizer comprises the reaction product of a reaction mixture comprising: (a) a macromer that contains reactive unsaturation, (b) an ethylenically unsaturated compound, (c) a free radical initiator, (d) a polymer control agent; and, in some cases, (e) a chain transfer agent.

In some implementations, the macromer utilized to produce the pre-formed stabilizer comprises the reaction product of a reaction mixture comprising: (i) an H-functional starter having a functionality of 2 to 8 and a hydroxyl number of 20 to 50 mg KOH/g polyol; (ii) 0.1 to 3% by weight, based on 100% by weight of the sum of components (i), (ii) and (iii), of a hydroxyl-reactive compound that contains reactive unsaturation; and (iii) 0 to 3% by weight, such as 0.05 to 2.5% by weight, or 0.1 to 1.5% by weight, based on 100% by weight of the sum of components (i), (ii) and (iii), of a diisocyanate.

Suitable pre-formed stabilizers can be prepared by reacting a combination of components (a), (b), (c) and (d), and optionally, (e), as described above, in a reaction zone maintained at a temperature sufficient to initiate a free radical reaction, and under sufficient pressure to maintain only liquid phases in the reaction zone, for a sufficient period of time to react (a), (b) and (c); and recovering a mixture containing the pre-formed stabilizer dispersed in the polymer control agent.

Suitable starters for use in preparing the macromer include compounds having a hydroxyl functionality of 2 to 8, such as 3 to 6, and a hydroxyl number of 20 to 50 mg KOH/g polyol, such as 25 to 40 mg KOH/g polyol. A specific example of a suitable starter is an alkylene oxide adduct of a hydroxyl functional compound, such as ethylene glycol, propylene glycol, diethylene glycol, dipropylene glycol, tripropylene glycol, glycerin, trimethylolpropane, pentaerythritol, sorbitol, ethylenediamine, and toluene diamine, among others, including mixtures of any two or more thereof, in which the alkylene oxide comprises, for example, propylene oxide, ethylene oxide, butylene oxide, or styrene oxide, among others, including mixtures of any two or more thereof. When a mixture of alkylene oxides are used to form the starter, a mixture of propylene oxide and ethylene oxide may be advantageous. Such mixtures may be added simultaneously (*i.e.* two or more alkylene oxide are added as co-feeds), or sequentially (one alkylene oxide is added first, and then another alkylene oxide is added). It is possible to use a combination of simultaneous and sequential addition of alkylene oxides. In one embodiment, an alkylene oxide such as propylene oxide may be added first, and then a second alkylene oxide such as ethylene oxide added as a cap.

Other examples of suitable starters for preparing the macromer are polyoxyethylene glycols, triols, tetrols and higher functionality polyols, and mixtures thereof, as well as alkylene oxide adducts of non-reducing sugars and sugar derivatives, alkylene oxide adducts of phosphorus and polyphosphorus acids, alkylene oxide adducts of polyphenols, polyols prepared from natural oils such as, for example, castor oil, and alkylene oxide adducts of polyhydroxyalkanes other than those described above. Illustrative alkylene oxide adducts of polyhydroxyalkanes include, for example, alkylene oxide adducts of 1,3-dihydroxypropane, 1,3-dihydroxybutane, 1,4-dihydroxybutane, 1,4-, 1,5- and 1,6-dihydroxyhexane, 1,2-, 1,3-, 1,4-1,6- and 1,8-dihydroxyoctant, 1,10-dihydroxydecane, glycerol, 1,2,4-tirhydroxybutane, 1,2,6-trihydroxyhexane, 1,1,1-trimethyl-olethane, 1,1,1-trimethylolpropane, pentaerythritol, caprolactone, polycaprolactone, xylitol, arabitol, sorbitol, and mannitol. Specific examples of alkylene oxide adducts of non-reducing sugars, include those where the alkoxides have from 2 to 4 carbon atoms. Non-reducing sugars and sugar derivatives include sucrose, alkyl glycosides, such as methyl glycoside and ethyl glucoside, glycol glucosides, such as ethylene glycol, glycoside, propylene glycol glucoside, glycerol glucoside, and 1,2,6-hexanetriol glucoside, and alkylene oxide adducts of the alkyl glycosides. Other suitable polyols starters for preparing the macromer include polyphenols, such as alkylene oxide adducts thereof, wherein the alkylene oxides have from 2 to 4 carbon atoms. Suitable polyphenols include, for example bisphenol A, bisphenol F, condensation products of phenol and formaldehyde, the novolac resins, condensation products of various phenolic compounds and acrolein, including the 1,1,3-tris(hydroxy-phenyl)propanes, condensation products of various phenolic compounds and glyoxal, glutaraldehyde, other dialdehydes, including the 1,1,2,2-tetrakis (hydroxyphenol)ethanes.

In some implementations, the starter used to prepare the macromer has a functionality of from 3 to 6 and a hydroxyl number of from 25 to 40 mg KOH/g polyol, and is prepared by reacting a starter such as glycerin, trimethylolpropane, pentaerythritol, dipentaerythritol, sorbitol, mannitol, or a mixture of any two or more thereof, with an alkylene oxide comprising propylene oxide and/or ethylene oxide. In some of these embodiments, ethylene oxide is utilized in an amount of 1 to 40% by weight, such as 5 to 30% by weight or 10 to 25% by weight, based on the total weight of the starter compound. In some embodiments, all or a portion of the ethylene oxide is added as a cap on the end of the starter compound. Suitable amounts of ethylene oxide to be added as a cap range from, for example, 1 to 40% by weight, such as 3 to 30% by weight or 5 to 25% by weight, based on the total weight of starter.

As indicated earlier, in some implementations, the reaction mixture used to produce the macromer utilized to produce the pre-formed stabilizer also comprises a hydroxyl-reactive compound that contains reactive unsaturation. Suitable such compounds include, for example, methyl methacrylate, ethyl methacrylate, maleic anhydride, isopropenyl dimethyl benzyl isocyanate, 2-isocyanatoethyl methacrylate, adducts of isophorone diisocyanate and 2-hydroxyethyl methacrylate, and adducts of toluenediisocyanate and 2-hydroxypropyl acrylate, including mixtures of any two or more thereof.

As also indicated earlier, in some implementations, the reaction mixture used to produce the macromer utilized to produce the pre-formed stabilizer may also comprise a diisocyanate. Suitable diisocyanates include various isomers of diphenylmethane diisocyanate and isomeric mixtures of diphenylmethane diisocyanate, such as, for example, mixtures of 2,4'-diphenylmethane diisocyanate, 4,4'-diphenylmethane diisocyanate and/or 2,2'-diphenyl-methane diisocyanate. Other suitable isocyanates include toluenediisocyanate, isophoronediisocyanate, hexamethylenediisocyanate, and 4,4'-methylenebis(cyclohexyl isocyanate), among others, includes mixtures of any two or more thereof.

In certain implementations, the macromer is used in an amount of 10 to 40% by weight, such as 15 to 35% by weight, based on the total weight of the reaction mixture used to produce the pre-formed stabilizer.

As previously mentioned, in some implementations, the reaction mixture used to form the pre-formed stabilizer used to produce the PMPO also comprises an ethylenically unsaturated compound. Suitable such ethylenically unsaturated compounds are aliphatic conjugated dienes, such as butadiene and isoprene, monovinylidene aromatic monomers such as styrene, α-methylstyrene, (t-butyl)styrene, chlorostyrene, cyanostyrene and bromostyrene, α,β-ethylenically unsaturated carboxylic acids and esters thereof, such as acrylic acid, methacrylic acid, methyl (meth)acrylate, ethyl (meth)acrylate, 2-hydroxyethyl (meth)acrylate, butyl (meth)acrylate, itaconic acid, maleic anhydride and the like, α,β-ethylenically unsaturated nitriles and amides, such as acrylonitrile, methacrylonitrile, acrylamide, methacrylamide, N,N-dimethyl acrylamide, N-dimethylaminomethyl)acryl-amide and the like, vinyl esters, such as vinyl acetate; vinyl ethers, vinyl ketones, vinyl and vinylidene halides, as well as a wide variety of other ethylenically unsaturated materials which are copolymerizable with the macromer, including mixtures of any two or more thereof.

In some implementations, the reaction mixture used to form the pre-formed stabilizer used to produce the PMPO comprises an ethylenically unsaturated monomer comprising a mixture of acrylonitrile and at least one other ethylenically unsaturated comonomer which is copolymerizable with acrylonitrile, such as, for example, styrene and its derivatives, acrylates, methacrylates, such as methyl methacrylate, vinylidene chloride, among others, as well as mixtures of any two or more thereof. When using acrylonitrile with a comonomer, it is sometimes desirable that a minimum of 5 to 15% by weight acrylonitrile be maintained in the system. One specific ethylenically unsaturated monomer mixtures suitable for making the pre-formed stabilizer comprises mixtures of acrylonitrile and styrene in which, for example, acrylonitrile is used in an amount of 20 to 80% by weight, such as 30 to 70% by weight, based on the total weight of the monomer mixture, and styrene is used in an amount of 80 to 20% by weight, such as 70 to 30% by weight percent, based on the total weight of the monomer mixture. In some cases, the ethylenically unsaturated composition used to make the pre-formed stabilizer consists of only monofunctional monomers, such as styrene and/or acrylonitrile.

In certain implementations, the ethylenically unsaturated compound is used in an amount of 10 to 30% by weight, such as 15 to 25% by weight, based on the total weight of the reaction mixture used to produce the pre-formed stabilizer.

The reaction mixture used to produce the pre-formed stabilizer, in some implementations, also include a free radical initiator. Exemplary suitable free-radical initiators include peroxides, including both alkyl and aryl hydro-peroxides, persulfates, perborates, percarbonates, and azo compounds. Some specific examples include hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, azobis(isobutyronitrile), and 2,2'-azo bis-(2-methylbutyronitrile). In some cases, the catalyst selected is one having a half-life that is 25 percent or less of the residence time in the reactor at a given temperature. Representative examples of useful initiators species include t-butyl peroxy-2-ethyl-hexanoate, t-butylperpivalate, t-amyl peroctoate, 2,5-dimethyl-hexane-2,5-di-per-2-ethyl hexoate, t-butylperneodecanoate, and t-butylperbenzoate, as well as azo compounds, such as azobisisobutyronitrile, 2,2'-azo bis-(2-methylbutyro-nitrile), and mixtures thereof.

In some implementations, the free radical initiator is used in an amount of 0.01 to 2% by weight, such as 0.05 to 1% by weight or 0.05 to 0.3% by weight, based on the total weight of the reaction mixture used to produce the pre-formed stabilizer.

The reaction mixture used to produce the pre-formed stabilizer, in some implementations, also include a polymer control agent. Suitable polymer control agents include various mono-ols (i.e. monohydroxy alcohols), aromatic hydrocarbons, and ethers. Specific examples of suitable polymer control agents are alcohols containing at least one carbon atom, such as methanol, ethanol, n-propanol, isopropanol, n-butanol, sec.-butanol, t-butanol, n-pentanol, 2-pentanol, 3-pentanol, and the like, and mixtures of any two or more thereof. Other suitable polymer control agents include ethylbenzene and toluene. The polymer control agent can be used in substantially pure form (i.e. as commercially available) or can be recovered in crude form from the PMPO production process and reused as-is. For instance, if the polymer control agent is isopropanol, it can be recovered from the PMPO process and used at any point in a subsequent product campaign in which the isopropanol is present.

In certain implementations, the polymer control agent is used in an amount of 30 to 80% by weight, such as 40 to 70% by weight, based on the total weight of the reaction mixture used to produce the pre-formed stabilizer.

As previously indicated, the reaction mixture used to produce the pre-formed stabilizer, in certain implementations, may also include a chain transfer agent. Suitable chain transfer agents include alkylene oxide adducts having a hydroxyl functionality of greater 3. In some implementations, the chain transfer agent is the same as or equivalent to the polyol used in the formation of precursor used to prepare the pre-formed stabilizer. In certain implementations, the chain transfer agent is used in an amount of 0 to 40% by weight, such as 0 to 20% by weight, or, in some cases, 0 to 10% by weight, based on the total weight of the reaction mixture used to produce the pre-formed stabilizer.

The pre-formed stabilizer can be produced by a process similar to that of making the PMPO. The temperature range is not critical and may vary from, for example, 80°C to 150°C, such as 115°C to 125°C. The mixing conditions employed can, for example, be those obtained using a back mixed reactor (such as a stirred flask or stirred autoclave).

As indicated earlier, the reaction mixture used to produce certain implementations of the PMPO also comprises a free radical initiator. Suitable such free-radical initiators include, for example, any of those described previously with respect to the production of the pre-formed stabilizer. In certain implementations, the free-radical initiator is present in the reaction mixture used to produce the PMPO in an amount of 0.01 to 2% by weight, based on 100% by weight of the final PMPO.

In some implementations, the reaction mixture used in preparing the PMPO further comprises a chain transfer agent. Examples of suitable chain transfer agents are mercaptans, such as dodecane thiol, ethane thiol, octane thiol, and toluene thiol, halogenated hydrocarbons, such as carbon tetrachloride, carbon tetrabromide, and chloroform, amines, such as diethylamine, and enol-ethers. In some embodiments, if used, the chain transfer agent is used in an amount of 0.1 to 2% by weight, such as 0.2 to 1% by weight, based on the total weight of the reaction mixture used to produce the PMPO.

The foregoing PMPOs can be made using any suitable process (including continuous and semi-batch) and reactor configuration, such as, for example, a two-stage reaction system comprising a continuously-stirred tank reactor (CSTR) fitted with impeller(s) and baffles (first-stage) and a plug-flow reactor (second stage). Furthermore, the reaction system can utilize a wide range of mixing conditions. The reaction system may be characterized by energy inputs of from 0.5 to 350 horsepower per 1000 gallons, such as 2 to 50 horsepower per 1000 gallons on average for the bulk phase volume of each reactor as a particularly useful mixing power input. Mixing can be provided by any combination of impeller(s) and pump-around loop/jet mixing. In addition, such PMPOs can be prepared from various types and combinations of axially and/or radially/tangentially acting impellers including, but not limited to, 4-pitched-blade, 6-pitched-blade, 4-flat-blade, 6-flat-blade, pitched-blade turbine, flat-blade turbine, Rushton, Maxflow, propeller, etc. For a continuous production process to prepare PMPOs, a residence time ranging of 20 to 180 minutes for the first reactor may be particularly useful.

In some implementations, the one or more of the feeds to the reactor are pumped from feed tanks through an in-line static mixer, and then, through a feed tube into the reactor. It may be particularly useful to prepare a premix of the initiator with part of the polyol stream, as well as of polyol and stabilizer. In general, feed stream temperatures are ambient (i.e. 25°C). However, if desired, feed streams can be heated prior to mixing and entering the reactor. Other process conditions, which may be useful, include cooling of the feed tube in the reactor. Furthermore, the suitable reaction conditions for PMPOs in general may be characterized by a reaction temperature in the range of 80 to 200°C and a pressure in the range of 20 to 80 psig. Typically, the product can then treated in a single or multi staged stripping step to remove volatiles before entering a stage, which can essentially be any combination of filtration and/or product cooling.

In many cases, the PMPO is produced by utilizing a low monomer to polyol ratio which is maintained throughout the reaction mixture during the process. This can be achieved by employing conditions that provide rapid conversion of monomer to polymer. In practice, a low monomer to polyol ratio is maintained, in the case of semi-batch and continuous operation, by control of the temperature and mixing conditions and, in the case of semi-batch operation, also by slowly adding the monomers to the polyol. The temperature range is not critical and may vary from, for example, 80°C to 200°C, 100°C to 140°C, or, in some cases, 115°C to 125°C.

One suitable continuous process for making PMPOs of this specification comprises (1) providing a heterogenous mixture of the pre-formed stabilizer and, optionally, liquid diluent, in combination with base polyol, the ethylenically unsaturated composition, and a free radical polymerization initiator, and (2) feeding the mixture to a reaction zone maintained at a temperature sufficient to initiate a free radical reaction, and under sufficient pressure to maintain only liquid phases in the reaction zone, (3) maintaining the mixture in the reaction zone for a period of time sufficient to react at least a major portion of the ethylenically unsaturated composition to form a heterogenous mixture containing an enhanced PMPO, unreacted monomers and diluent, and (4) stripping the unreacted monomers and diluent from the enhanced PMPO to recover the unreacted monomers and diluent.

In some implementations, the polymer particles (whether individual particles or agglomerates of individual particles) are relatively small in size and, in some cases, have a weight average diameter less than ten microns.

Following polymerization, volatile constituents, in particular those from the polymer control agent and residues of monomers are generally stripped from the product by, for example, vacuum distillation, such as in a thin layer of a falling film evaporator. The monomer-free product may be used as is, or may be filtered to remove any large particles that may have been created. In some cases, all of the product will pass through the filter employed in the 150 mesh filtration hindrance test.

Certain embodiments of this specification are, therefore, directed to polyurethane foams produced using the PMPOs produced as described above, as well to methods of manufacturing such polyurethane foam. Polyurethane foams can be produced from reacting a reaction mixture comprising: (1) a polyisocyanate and (2) an isocyanate-reactive component. The isocyanate-reactive component may comprise any of the PMPOs described herein. In addition, the isocyanate-reactive component may include: (i) other polyols, such as one or more other polyether polyols having a functionality of 2 to 6, an OH number of 18 to 238 mg KOH/g, and a number average molecular weight of 160 to 8000, (ii) a blowing agent, (iii) another catalyst, and (iv) a surfactant. In some cases, the PMPO described above is present in an amount of at least 20% by weight, at least 40% by weight, at least 50% by weight, or at least 60% by weight, based on total weight of polyol present in the isocyanate-reactive component. Further, in some cases, other polyols present in the isocyanate-reactive component comprise a polyether polyol having an internal propylene oxide or mixed propylene oxide/ethylene oxide block and terminal ethylene oxide blocks, *i.e.,* an ethylene oxide cap, such as where ethylene oxide is used in an amount of 10 to 30% by weight, based on total weight of alkylene oxide used to prepare the polyether polyol.

As used herein, the term "polyisocyanate" includes diisocyanates as well as polyisocyanates having an isocyanate functionality of more than 2.0. Suitable polyisocyanates include, without limitation, 2,4- and 2,6-toluylene diisocyanate and any desired mixtures of these isomers ("TDI"); polyphenylpolymethylene polyisocyanates, such as those prepared by aniline-formaldehyde condensation followed by phosgenation ("crude MDI"); and polyisocyanates having carbodiimide groups, urethane groups, allophanate groups, isocyanurate groups, urea groups or biuret groups (sometimes referred to as "modified polyisocyanates"), such as modified polyisocyanates derived from 2,4- and/or 2,6-toluylene diisocyanate or from 4,4'- and/or 2,4'-diphenylmethane diisocyanate. In some implementations, the polyisocyanate comprises 2,4- and/or 2,6-toluylene diisocyanate, 4,4'-, 2,4'- and/or 2,2'-diphenylmethane diisocyanate, or a polyphenylpolymethylene polyisocyanate ("polynuclear MDI", such as where the polyisocyanate comprises a mixture comprising 4,4'-diphenylmethane diisocyanate, 2,4'-diphenylmethane diisocyanate and polyphenylpolymethylene polyisocyanate

Suitable blowing agents include halogenated hydrocarbons, halogenated olefins, water, liquid carbon dioxide, low boiling solvents such as, for example, pentane, and other known blowing agents. In some embodiments, the blowing agent comprises, or consists of, water. In certain implementations, blowing agent is used in an amount of 1 to 7 parts, such as 1 to 5 parts, by weight, based on the total weight of the isocyanate-reactive component.

Suitable catalysts include amine and tin based catalysts, such as diethylenetriamine, triethylenediamine, bis(2,2'-di-methylamino)ethyl ether, N,N,N',N",N"-pentamethyldiethylenetriamine, dibutyltin dilaurate, dibutyltin diacetate, and stannous octoate, and the like. In certain implementations, catalyst is used in an amount of 0.001 to 2 parts by weight, based on the total weight of the polyol composition.

As indicated earlier, since the ethylenically unsaturated compound of structure (I) itself contains a tertiary amine group, the resulting polymer particles can act as a tertiary amine catalyst during polyurethane foam production. In fact, it has been discovered, surprisingly, that the content of relatively low molecular weight tertiary amine catalysts, such as, for example, triethylenediamine and bis(2-dimethylaminoethyl) ether, can be significantly reduced in a foam-forming composition, without negatively impacting the reactivity profile of the composition. It is believed, therefore, that use of the PMPOs of this specification can enable foam formulators to significantly reduce the content of potentially volatile tertiary amine catalysts in a foam formulation without negatively impacting other reactivity properties of the formulation.

In addition, the isocyanate-reactive component may, if desired, include a low molecular weight chain extender and/or cross-linking agent which has a molecular weight of, for example, below 300 Da. Examples include, but are not limited to, glycerin, pentaerythritol, ethylene glycol, sorbitol, and alkanolamines, such as monoethanolamine, diethanolamine (DEOA) and triethanolamine (TEOA). In certain implementations, such chain extender and/or cross-linking agent is used in an amount of up to 5 parts per by weight, such as 0.4 to 3.5 parts by weight, based on the total weight of the isocyanate-reactive component.

Suitable surfactants include, but are not limited to, commercially available polyetherpolysiloxane foam stabilizers.

If desired, the reaction mixture may include any of a variety of additional ingredients/additives, such as flame retardants, antioxidants, pigments, dyes, liquid and solid fillers, and many other commercial additives can also be included in the foams in conventional amounts.

This specification also relates to foams prepared from the foregoing reaction mixtures, as well as to methods of producing such foams. Suitable foam preparation methods include continuous or discontinuous free-rise slabstock foam processes and molded foam processes.

In a continuous slabstock process, the isocyanate is continuously mixed together with the other formulation chemicals by passing through a mixing head and then into a trough which overflows onto a moving conveyor. Alternatively, the reaction mixture is deposited directly onto the moving conveyor. In another embodiment, high pressure liquid carbon dioxide is fed into one or more of the formulation components, typically the polyol, entering into the mixing head and the resin blend is passed through a frothing device where the pressure is let down and the resultant froth is deposited onto the conveyor. The foam expands and rises as it moves down the conveyor to form a continuous foam slab that is cut into blocks or buns of the desired length for curing and storage. After curing for one or more days, these foam buns can be cut into the desired shapes for the end-use applications.

In the discontinuous process, the reactants are quickly mixed together through a head or in a large mixing chamber. The reaction mixture is then deposited into a container, such as a large box, where foam expansion occurs to form a bun of the lateral dimensions of the container.

A molded foam process usually employs a one-shot approach in which a specific amount of the isocyanate stream (the "A" side) is rapidly combined and mixed with a specific amount of the remaining formulation components (the "B" side). An additional stream may be employed to bring in one or more specific components not included with the "B" side stream. The mixture is quickly deposited into a mold that is then closed. The foam expands to fill the mold and produce a part with the shape and dimensions of the mold. The polyurethane foam is then cured by heating in a temperature regulated mold or by passing the mold through a heated oven.

The polyurethane foam can be prepared by reacting the polyisocyanate component with the isocyanate-reactive component, wherein the polyisocyanate component is present in an amount sufficient to, for example, provide an isocyanate index of 70 to 130, such as 80 to 120 or 90 to 115.

Various aspects of the subject matter described herein are set out in the following numbered clauses:
Clause 1. A polymer polyol (PMPO) comprising: (a) a base polyol having a hydroxyl functionality of 2 to 8 and an OH number of 20 to 400 mg KOH/g polyol; and (b) polymer particles dispersed in the base polyol, wherein the polymer particles comprise a reaction product of a reaction mixture comprising an ethylenically unsaturated composition, the ethylenically unsaturated composition comprising an ethylenically unsaturated compound of the general structure (I):

   Y-X-Z (I)

   in which: (1) Y represents a moiety that comprises ethylenic unsaturation; (2) X represents oxygen or NH; and (3) Z represents a (cyclo)aliphatic moiety that comprises a tertiary amino group.
Clause 2. The PMPO of clause 1, wherein the PMPO has a solids content of 30 to 75% by weight, 35 to 70% by weight, 40 to 60% by weight, or 45 to 55% by weight, based on the total weight of the PMPO.
Clause 3. The PMPO of clause 1 or clause 2, wherein the PMPO has a viscosity of less than 50,000 mPa·s, less than 40,000 mPa·s, less than 30,000 mPa·s, less than 20,000 mPa·s or less than 10,000 mPa·s.
Clause 4. The PMPO of one of clause 1 to clause 3, wherein the base polyol has a functionality of 2 to 6 or 3 to 6, and/or an OH number of 20 to 200 mg KOH/g, 20 to 150 mg KOH/g, 20 to 100 mg KOH/g, or, in some cases, 20 to 60 mg KOH/g, 25 to 60 mg KOH/g, or 30 to 60 mg KOH/g.
Clause 5. The PMPO of one of clause 1 to clause 4, wherein the base polyol comprises a polyoxyethylene glycol, a polyoxyethylene triol, a polyoxyethylene tetrol, a higher functionality polyoxyethylene polyol, a polyoxypropylene glycol, a polyoxypropylene triol, a polyoxypropylene tetrol, a higher functionality polypropylene polyol, or a mixture of any two or more thereof, such as where the base polyol comprises a polyether polyol having an internal propylene oxide or mixed propylene oxide/ethylene oxide block and terminal ethylene oxide blocks, such as where ethylene oxide is used in an amount of 10 to 30% by weight, based on total weight of alkylene oxide used to prepare the polyether polyol.
Clause 6. The PMPO of one of clause 1 to clause 5, wherein Y in structure (I) is 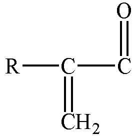 in which R is hydrogen or CH₃.
Clause 7. The PMPO of one of clause 1 to clause 6, wherein Z in structure (I) is 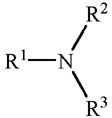 in which R¹ is C₁-C₆ alkylene and R² and R³, which may be the same or different, are each C₁-C₆ alkyl.
Clause 8. The PMPO of one of clause 1 to clause 7, wherein the ethylenically unsaturated compound of the general structure (I) is of the structure (II): 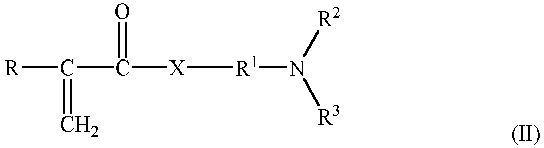 in which: (1) R is hydrogen or CH₃; (2) X is O or NH; (3) R¹ is C₁-C₆ alkylene; and (4) R² and R³, which may be the same or different, are each C₁-C₆ alkyl.
Clause 9. The PMPO of clause 8, wherein the ethylenically unsaturated compound of structure (II) comprises dimethylaminoethylmethacrylate, dimethylaminopropylmethacrylamide, or a combination thereof.
Clause 10. The PMPO of one of clause 1 to clause 9, wherein Z further comprises an ether linkage and/or a secondary amine group.
Clause 11. The PMPO of one of clause 1 to clause 10, wherein the ethylenically unsaturated compound of the structure (I) comprises a reaction product of reactants comprising: (i) a hydroxyl and/or primary amine-containing (cyclo)aliphatic compound having at least one tertiary amino group; and (ii) an ethylenically unsaturated compound comprising at least one group reactive with the hydroxyl and/or primary amine group of (i).
Clause 12. The PMPO of clause 11, wherein the hydroxyl and/or primary amine-containing (cyclo)aliphatic compound having at least one tertiary amino group comprises a compound of structure (III): 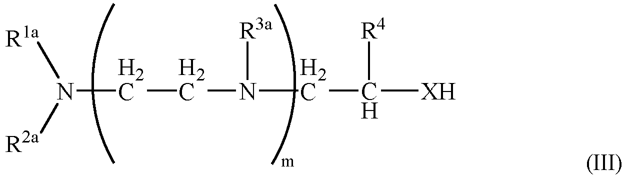 in which: (1) R^{1a}, R^{2a}, and R^{3a}, which may be the same or different, are each a linear or branched alkyl group, such as a linear or branched C₁ to C₄ alkyl group; (2) R⁴ is hydrogen or CH₃; (3) m is an integer having a value of 1 to 3; and (4) X is oxygen or nitrogen; or
   a compound of structure (IV): 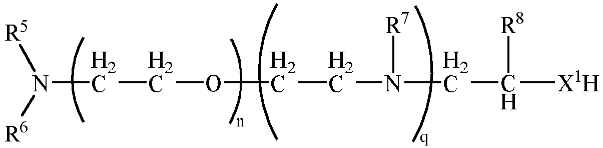 in which: (1) R⁵, R⁶, and R⁷, which may be the same or different, are each a linear or branched alkyl group, such as a linear or branched C₁ to C₄ alkyl group; (2) R⁸ is hydrogen or CH₃; (3) n and q, which may be the same or different, are each an integer having a value of 1 to 3; and (4) X¹ is oxygen or nitrogen; or a combination of a compound of structure (III) and a compound of structure (IV).
Clause 13. The PMPO of clause 12, wherein the hydroxyl and/or primary amine-containing (cyclo)aliphatic compound having at least one tertiary amino group comprises a compound of structure (IV) in which R⁵, R⁶, and R⁷ are CH₃, R⁸ is hydrogen, X¹ is oxygen, n is 1, and q is 1.
Clause 14. The PMPO of one of clause 11 to clause 13, wherein the hydroxyl and/or primary amine-containing (cyclo)aliphatic compound having at least one tertiary amino group comprises: 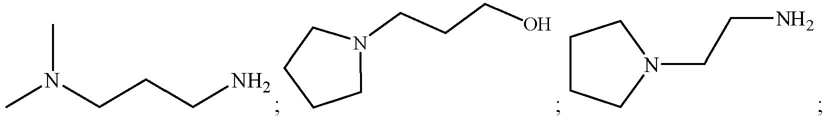 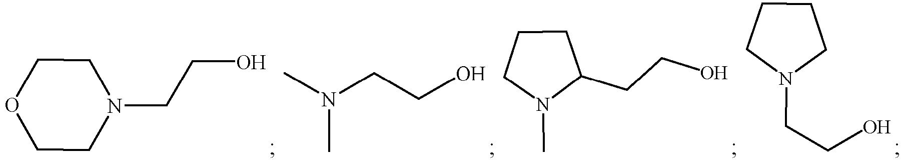 or a combination of any two or more thereof.
Clause 15. The PMPO of one of clause 11 to clause 14, wherein the ethylenically unsaturated compound comprising at least one group reactive with the hydroxyl and/or primary amine group of (i) comprises an isocyanate-functional ethylenically unsaturated compound, an oxirane-functional ethylenically unsaturated compound, an ethylenically unsaturated carboxylic acid anhydride, or a combination of any two or more thereof.
Clause 16. The PMPO of clause 15, wherein the ethylenically unsaturated compound comprising at least one group reactive with the hydroxyl and/or primary amine group of (i) comprises an isocyanate-functional ethylenically unsaturated compound, wherein the isocyanate-functional ethylenically unsaturated compounds comprises 3-isopropenyl-α,α-dimethylbenzyl-isocyanate, 4-isopropenyl-α,α-dimethylbenzyl-isocyanate, 2-propenoyl isocyanate, 2-methyl-2-propenoyl isocyanate, allyl isocyanate, methallyl isocyanate, isocyantoethyl (meth)acrylate, isocyanatopropyl (meth)acrylate, isocyanatobutyl (meth)acrylate, an adduct of (i) a monohydroxy-substituted monofunctional or multifunctional (meth)acrylate, and (ii) a polyisocyanate, or a combination of any two or more thereof.
Clause 17. The PMPO of clause 15 or clause 16, wherein the ethylenically unsaturated compound comprising at least one group reactive with the hydroxyl and/or primary amine group of (i) comprises an oxirane-functional ethylenically unsaturated compound, wherein the oxirane-functional ethylenically unsaturated compound comprises glycidyl (meth)acrylate, allyl glycidylether, vinyl glycidylether, vinyl cyclohexene oxide, limonene oxide, 2-ethylglycidyl(meth)acrylate, 2-(n-propyl)glycidyl(meth)acrylate, 2-(n-butyl)glycidyl(meth)acrylate, dimethylglycidyl methacrylate, glycidylmethylmethacrylate, glycidylacrylate, 2,3-epoxybutyl methacrylate, (3',4'-epoxyheptyl)-2-ethyl(meth)acrylate, (6',7'-epoxyheptyl)(meth)acrylate, allyl-3,4-epoxyheptylether, 6,7-epoxyheptylallylether, vinyl-3,4-epoxyheptylether, 3,4-epoxyheptylvinylether, 6,7-epoxyheptylvinylether, o-vinylbenzylglycidylether, m-vinylbenzylglycidylether, p-vinylbenzylglycidylether, 3-vinyl cyclohexene oxide, α-methyl glycidyl methacrylate, 3,4-epoxycyclohexylmethyl (meth)acrylate, (3-methyloxiran-2-yl) methyl 2-methacrylate, styrene glycidyl ether, 2, 4-vinylphenyl glycidyl ether, or a combination of any two or more thereof.
Clause 18. The PMPO of one of clause 15 to clause 17, wherein the ethylenically unsaturated compound comprising at least one group reactive with the hydroxyl and/or primary amine group of (i) comprises an ethylenically unsaturated carboxylic acid anhydride, wherein the ethylenically unsaturated carboxylic acid anhydride comprises maleic anhydride, itaconic anhydride; citraconic anhydride; aconitic anhydride; bicyclo[2.2.2]oct-7-ene-2,3,5,6-tetracarboxylic dianhydride; crotonic anhydride;1-cyclopentene-1,2-dicarboxylic anhydride; methacrylic anhydride; as well as combinations of any two or more thereof.
Clause 19. The PMPO of one of clause 1 to clause 18, wherein the ethylenically unsaturated compound of structure (I) is present in an amount of 0.1 to 10% by weight, 0.1 to 5% by weight, 1 to 5% by weight, or 1 to 3% by weight, based on the total weight of the ethylenically unsaturated composition.
Clause 20. The PMPO of one of clause 1 to clause 19, wherein the ethylenically unsaturated composition further comprises styrene, a derivative of styrene, acrylonitrile, methyl acrylate, methyl methacrylate, vinylidene chloride, or a combination of any two or more thereof.
Clause 21. The PMPO of clause 20, wherein the ethylenically unsaturated composition comprises styrene and acrylonitrile, such as where styrene and acrylonitrile are present in a weight ratio of styrene to acrylonitrile (S:AN) of 80:20 to 20:80 or 75:25 to 25:75.
Clause 22. The PMPO of clause 20 or clause 21, wherein the sum of the amount of styrene and acrylonitrile is 90 to 99.9% by weight, 95 to 99.9% by weight, 95 to 99% by weight, or 97 to 99% by weight, based on the total weight of the ethylenically unsaturated composition.
Clause 23. The PMPO of one of clause 1 to clause 22, wherein a reaction mixture to produce the PMPO further comprises a pre-formed stabilizer.
Clause 24. The PMPO of clause 23, wherein the pre-formed stabilizer comprises a reaction product of a reaction mixture comprising: (a) a macromer that contains reactive unsaturation, (b) an ethylenically unsaturated compound, (c) a free radical initiator, (d) a polymer control agent; and, optionally, (e) a chain transfer agent.
Clause 25. The PMPO of clause 24, wherein the macromer comprises a reaction product of a reaction mixture comprising: (i) an H-functional starter having a functionality of 2 to 8 and a hydroxyl number of 20 to 50 mg KOH/g polyol; (ii) 0.1 to 3% by weight, based on 100% by weight of the sum of components (i), (ii) and (iii), of a hydroxyl-reactive compound that contains reactive unsaturation; and (iii) 0 to 3% by weight, 0.05 to 2.5% by weight, or 0.1 to 1.5% by weight, based on 100% by weight of the sum of components (i), (ii) and (iii), of a diisocyanate.
Clause 26. The PMPO of clause 25, wherein the H-functional starter having a functionality of 2 to 8 and a hydroxyl number of 20 to 50 mg KOH/g polyol has a functionality of 3 to 6 and/or a hydroxyl number of 25 to 40 mg KOH/g polyol.
Clause 27. The PMPO of clause 25 or clause 26, wherein the H-functional starter having a functionality of 2 to 8 and a hydroxyl number of 20 to 50 mg KOH/g polyol is an alkylene oxide adduct of a hydroxyl functional compound.
Clause 28. The PMPO of one of clause 25 to clause 27, wherein the hydroxyl-reactive compound that contains reactive unsaturation comprises methyl methacrylate, ethyl methacrylate, maleic anhydride, isopropenyl dimethyl benzyl isocyanate, 2-isocyanatoethyl methacrylate, an adduct of isophorone diisocyanate and 2-hydroxyethyl methacrylate, an adduct of toluenediisocyanate and 2-hydroxypropyl acrylate, or a combination of any two or more thereof.
Clause 29. The PMPO of one of clause 25 to clause 28, wherein the diisocyanate comprises a diphenylmethane diisocyanate; such as a mixture of 2,4'-diphenylmethane diisocyanate, 4,4'-diphenylmethane diisocyanate and/or 2,2'-diphenyl-methane diisocyanate; toluenediisocyanate; isophoronediisocyanate; hexamethylenediisocyanate; 4,4'-methylenebis(cyclohexyl isocyanate); or a combination of any two or more thereof.
Clause 30. The PMPO of one of clause 25 to clause 29, wherein the macromer is present in an amount of 10 to 40% by weight or 15 to 35% by weight, based on the total weight of the reaction mixture used to produce the pre-formed stabilizer.
Clause 31. The PMPO of one of clause 25 to clause 30, wherein the ethylenically unsaturated compound used to form the pre-formed stabilizer comprises acrylonitrile and styrene in which acrylonitrile is used in an amount of 20 to 80% by weight or 30 to 70% by weight, based on the total weight of the monomer mixture, and styrene is used in an amount of 80 to 20% by weight or 70 to 30% by weight percent, based on the total weight of the monomer mixture, such as where the ethylenically unsaturated composition used to make the pre-formed stabilizer consists of only monofunctional monomers, such as styrene and/or acrylonitrile.
Clause 32. The PMPO of one of clause 25 to clause 31, wherein the ethylenically unsaturated compound is used in an amount of 10 to 30% by weight or 15 to 25% by weight, based on the total weight of the reaction mixture used to produce the pre-formed stabilizer.
Clause 33. The PMPO of one of clause 25 to clause 32, wherein the free radical initiator used to produce the pre-formed stabilizer comprises a peroxide, a persulfate, a perborate, a percarbonate, an azo compound, or a combination of any two or more thereof, such as where the free radical initiator is present in an amount of 0.01 to 2% by weight, 0.05 to 1% by weight or 0.05 to 0.3% by weight, based on the total weight of the reaction mixture used to produce the pre-formed stabilizer.
Clause 34. The PMPO of one of clause 25 to clause 33, wherein the polymer control agent comprises a mono-ol, an aromatic hydrocarbons, an ether, or a combination of any two or more thereof, such as where the polymer control agent is present in an amount of 30 to 80% by weight or 40 to 70% by weight, based on the total weight of the reaction mixture used to produce the pre-formed stabilizer.
Clause 35. The PMPO of one of clause 25 to clause 34, wherein the chain transfer agent comprises an alkylene oxide adduct having a hydroxyl functionality of greater 3, such as where the chain transfer agent is present in an amount of 0 to 40% by weight, 0 to 20% by weight, or 0 to 10% by weight, based on the total weight of the reaction mixture used to produce the pre-formed stabilizer.
Clause 36. The PMPO of one of clause 1 to clause 35, wherein a reaction mixture used to produce the PMPO comprises a free radical initiator, such as where the free-radical initiator is present in the reaction mixture used to produce the PMPO in an amount of 0.01 to 2% by weight, based on 100% by weight of the final PMPO.
Clause 37. The PMPO of one of clause 1 to clause 36, wherein a reaction mixture used to produce the PMPO comprises a chain transfer agent, such as where the chain transfer agent comprises a mercaptan, such as dodecane thiol, ethane thiol, octane thiol, and toluene thiol, a halogenated hydrocarbon, such as carbon tetrachloride, carbon tetrabromide, and chloroform, an amine, such as diethylamine, an enol-ether, or a combination of any two or more thereof, such as where the chain transfer agent is present in an amount of 0.1 to 2% by weight or 0.2 to 1% by weight, based on the total weight of the reaction mixture used to produce the PMPO.
Clause 38. A process for producing the PMPO of one of clause 1 to clause 37, comprising: (1) providing a heterogenous mixture of the pre-formed stabilizer and, optionally, liquid diluent, in combination with the base polyol, the ethylenically unsaturated composition, and a free radical polymerization initiator; (2) feeding the mixture to a reaction zone maintained at a temperature sufficient to initiate a free radical reaction, and under sufficient pressure to maintain only liquid phases in the reaction zone; (3) maintaining the mixture in the reaction zone for a period of time sufficient to react at least a major portion of the ethylenically unsaturated composition to form a heterogenous mixture containing an enhanced PMPO, unreacted monomers and diluent; and (4) stripping the unreacted monomers and diluent from the enhanced PMPO to recover the unreacted monomers and diluent.
Clause 39. A polyurethane foam-forming composition comprising: (1) a polyisocyanate and (2) an isocyanate-reactive component comprising the PMPO of one of clause 1 to clause 37, such as where the PMPO is present in an amount of at least 20% by weight, at least 40% by weight, at least 50% by weight, or at least 60% by weight, based on total weight of polyol present in the isocyanate-reactive component.
Clause 40. The polyurethane foam-forming composition of clause 39, wherein the isocyanate-reactive component further comprises a blowing agent, such as where the blowing agent comprises a halogenated hydrocarbon, a halogenated olefin, water, liquid carbon dioxide, a low boiling solvent, such as pentane, or a mixture of any two or more thereof, such as where the blowing agent comprises, or consists of, water, such as where the blowing agent, such as water, is present in an amount of 1 to 7 parts, such as 1 to 5 parts, by weight, based on the total weight of the isocyanate-reactive component.
Clause 41. The polyurethane foam-forming composition of clause 39 or clause 40, wherein the isocyanate-reactive component further comprises a catalyst comprising diethylenetriamine, triethylenediamine, bis(2,2'-di-methylamino)ethyl ether, N,N,N',N",N"-pentamethyldiethylenetriamine, dibutyltin dilaurate, dibutyltin diacetate, stannous octoate, or a combination of any two or more thereof, such as where the catalyst is present in an amount of 0.001 to 2 parts by weight, based on the total weight of the isocyanate-reactive component.
Clause 42. The polyurethane foam-forming composition of one of clause 39 to clause 41, wherein the isocyanate-reactive component further comprises chain extender and/or cross-linking agent having a molecular weight of below 300 Da, such as where the chain extender and/or cross-linking agent comprises glycerin, pentaerythritol, ethylene glycol, sorbitol, an alkanolamine, such as monoethanolamine, diethanolamine (DEOA) and triethanolamine (TEOA), or a combination of any two or more thereof, such as where the chain extender and/or cross-linking agent is present in an amount of up to 5 parts per by weight or 0.4 to 3.5 parts by weight, based on the total weight of the isocyanate-reactive component.
Clause 43. The polyurethane foam-forming composition of one of clause 39 to clause 42, wherein the isocyanate-reactive component further comprises a surfactant, such as where the surfactant comprises a polyetherpolysiloxane.
Clause 44. The polyurethane foam-forming composition of one of clause 39 to clause 43, wherein the polyisocyanate is present in an amount sufficient to provide the polyurethane foam-forming composition with an isocyanate index of 70 to 130, 80 to 120 or 90 to 115.
Clause 45. A method of producing a polyurethane foam comprising: (a) depositing the polyurethane foam-forming composition of one of clause 39 to clause 44 onto a moving conveyor; (b) allowing the foam-forming composition to expand and rise as it moves along the conveyor to form a continuous foam slab; and (c) cutting the continuous foam slab into foam blocks.
Clause 46. A method of producing a polyurethane foam comprising: (a) pouring the polyurethane foam-forming composition of one of clause 39 to clause 44 into a container; and (b) allowing the polyurethane foam-forming composition to rise freely in the container.
Clause 47. A method of producing a polyurethane foam comprising: (a) depositing the polyurethane foam-forming composition of one of clause 39 to clause 44 into a mold; (b) closing the mold; (c) allowing the polyurethane foam-forming composition to expand and fill the mold with the polyurethane foam; and (c) removing the polyurethane foam from the mold.
Clause 48. A PMPO comprising: (a) a base polyol having a hydroxyl functionality of 2 to 8 and an OH number of 20 to 400 mg KOH/g polyol; and (b) polymer particles dispersed in the base polyol, wherein the polymer particles comprise a reaction product of a reaction mixture comprising an ethylenically unsaturated composition, the ethylenically unsaturated composition comprising an ethylenically unsaturated reaction product of reactants comprising: (i) a hydroxyl and/or primary amine-containing (cyclo)aliphatic compound having at least one tertiary amino group; and (ii) an ethylenically unsaturated compound comprising at least one group reactive with the hydroxyl and/or primary amine group of (i).
Clause 49. The PMPO of clause 48, wherein the PMPO has a solids content of 30 to 75% by weight, 35 to 70% by weight, 40 to 60% by weight, or 45 to 55% by weight, based on the total weight of the PMPO.
Clause 50. The PMPO of clause 48 or clause 49, wherein the PMPO has a viscosity of less than 50,000 mPa·s, less than 40,000 mPa·s, less than 30,000 mPa·s, less than 20,000 mPa·s or less than 10,000 mPa·s.
Clause 51. The PMPO of one of clause 48 to clause 50, wherein the base polyol has a functionality of 2 to 6 or 3 to 6, and/or an OH number of 20 to 200 mg KOH/g, 20 to 150 mg KOH/g, 20 to 100 mg KOH/g, or, in some cases, 20 to 60 mg KOH/g, 25 to 60 mg KOH/g, or 30 to 60 mg KOH/g.
Clause 52. The PMPO of one of clause 48 to clause 51, wherein the base polyol comprises a polyoxyethylene glycol, a polyoxyethylene triol, a polyoxyethylene tetrol, a higher functionality polyoxyethylene polyol, a polyoxypropylene glycol, a polyoxypropylene triol, a polyoxypropylene tetrol, a higher functionality polypropylene polyol, or a mixture of any two or more thereof, such as where the base polyol comprises a polyether polyol having an internal propylene oxide or mixed propylene oxide/ethylene oxide block and terminal ethylene oxide blocks, *i.e.,* an ethylene oxide cap, such as where ethylene oxide is used in an amount of 10 to 30% by weight, based on total weight of alkylene oxide used to prepare the polyether polyol.
Clause 53. The PMPO of one of clause 48 to clause 52, wherein the hydroxyl and/or primary amine-containing (cyclo)aliphatic compound having at least one tertiary amino group comprises a compound of structure (III): 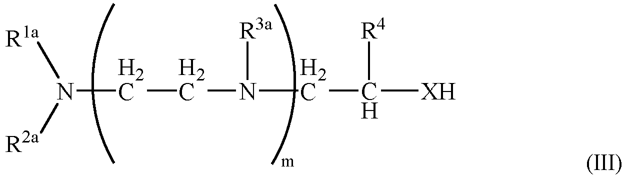 in which: (1) R^{1a}, R^{2a}, and R^{3a}, which may be the same or different, are each a linear or branched alkyl group, such as a linear or branched C₁ to C₄ alkyl group; (2) R⁴ is hydrogen or CH₃; (3) m is an integer having a value of 1 to 3; and (4) X is oxygen or nitrogen; or
   a compound of structure (IV): 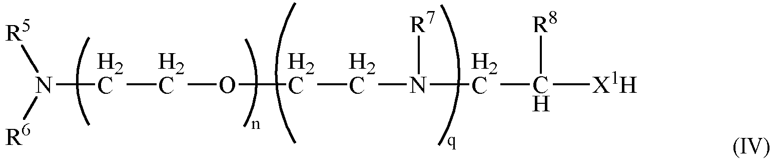 in which: (1) R⁵, R⁶, and R⁷, which may be the same or different, are each a linear or branched alkyl group, such as a linear or branched C₁ to C₄ alkyl group; (2) R⁸ is hydrogen or CH₃; (3) n and q, which may be the same or different, are each an integer having a value of 1 to 3; and (4) X¹ is oxygen or nitrogen; or a combination of a compound of structure (III) and a compound of structure (IV).
Clause 54. The PMPO of clause 53, wherein the hydroxyl and/or primary amine-containing (cyclo)aliphatic compound having at least one tertiary amino group comprises a compound of structure (IV) in which R⁵, R⁶, and R⁷ are CH₃, R⁸ is hydrogen, X¹ is oxygen, n is 1, and q is 1.
Clause 55. The PMPO of one of clause 48 to clause 51, wherein the hydroxyl and/or primary amine-containing (cyclo)aliphatic compound having at least one tertiary amino group comprises: 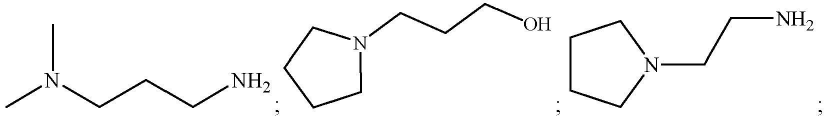 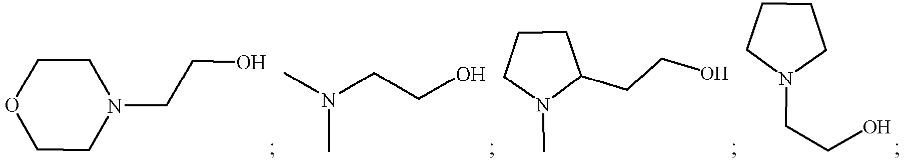 or a combination of any two or more thereof.
Clause 56. The PMPO of one of clause 48 to clause 55, wherein the ethylenically unsaturated compound comprising at least one group reactive with the hydroxyl and/or primary amine group of (i) comprises an isocyanate-functional ethylenically unsaturated compound, an oxirane-functional ethylenically unsaturated compound, an ethylenically unsaturated carboxylic acid anhydride, or a combination of any two or more thereof.
Clause 57. The PMPO of clause 56, wherein the ethylenically unsaturated compound comprising at least one group reactive with the hydroxyl and/or primary amine group of (i) comprises an isocyanate-functional ethylenically unsaturated compound, wherein the isocyanate-functional ethylenically unsaturated compounds comprises 3-isopropenyl-α,α-dimethylbenzyl-isocyanate, 4-isopropenyl-α,α-dimethylbenzyl-isocyanate, 2-propenoyl isocyanate, 2-methyl-2-propenoyl isocyanate, allyl isocyanate, methallyl isocyanate, isocyantoethyl (meth)acrylate, isocyanatopropyl (meth)acrylate, isocyanatobutyl (meth)acrylate, an adduct of (i) a monohydroxy-substituted monofunctional or multifunctional (meth)acrylate, and (ii) a polyisocyanate, or a combination of any two or more thereof.
Clause 58. The PMPO of clause 56 or clause 57, wherein the ethylenically unsaturated compound comprising at least one group reactive with the hydroxyl and/or primary amine group of (i) comprises an oxirane-functional ethylenically unsaturated compound, wherein the oxirane-functional ethylenically unsaturated compound comprises glycidyl (meth)acrylate, allyl glycidylether, vinyl glycidylether, vinyl cyclohexene oxide, limonene oxide, 2-ethylglycidyl(meth)acrylate, 2-(n-propyl)glycidyl(meth)acrylate, 2-(n-butyl)glycidyl(meth)acrylate, dimethylglycidyl methacrylate, glycidylmethylmethacrylate, glycidylacrylate, 2,3-epoxybutyl methacrylate, (3',4'-epoxyheptyl)-2-ethyl(meth)acrylate, (6',7'-epoxyheptyl)(meth)acrylate, allyl-3,4-epoxyheptylether, 6,7-epoxyheptylallylether, vinyl-3,4-epoxyheptylether, 3,4-epoxyheptylvinylether, 6,7-epoxyheptylvinylether, o-vinylbenzylglycidylether, m-vinylbenzylglycidylether, p-vinylbenzylglycidylether, 3-vinyl cyclohexene oxide, α-methyl glycidyl methacrylate, 3,4-epoxycyclohexylmethyl (meth)acrylate, (3-methyloxiran-2-yl) methyl 2-methacrylate, styrene glycidyl ether, 2, 4-vinylphenyl glycidyl ether, or a combination of any two or more thereof.
Clause 59. The PMPO of one of clause 56 to clause 58, wherein the ethylenically unsaturated compound comprising at least one group reactive with the hydroxyl and/or primary amine group of (i) comprises an ethylenically unsaturated carboxylic acid anhydride, wherein the ethylenically unsaturated carboxylic acid anhydride comprises maleic anhydride, itaconic anhydride; citraconic anhydride; aconitic anhydride; bicyclo[2.2.2]oct-7-ene-2,3,5,6-tetracarboxylic dianhydride; crotonic anhydride;1-cyclopentene-1,2-dicarboxylic anhydride; methacrylic anhydride; as well as combinations of any two or more thereof.
Clause 60. The PMPO of one of clause 48 to clause 59, wherein the ethylenically unsaturated reaction product of reactants comprising: (i) a hydroxyl and/or primary amine-containing (cyclo)aliphatic compound having at least one tertiary amino group; and (ii) an ethylenically unsaturated compound comprising at least one group reactive with the hydroxyl and/or primary amine group of (i) is present in an amount of 0.1 to 10% by weight, 0.1 to 5% by weight, 1 to 5% by weight, or 1 to 3% by weight, based on the total weight of the ethylenically unsaturated composition.
Clause 61. The PMPO of one of clause 48 to clause 60, wherein the ethylenically unsaturated composition further comprises styrene, a derivative of styrene, acrylonitrile, methyl acrylate, methyl methacrylate, vinylidene chloride, or a combination of any two or more thereof.
Clause 62. The PMPO of clause 61, wherein the ethylenically unsaturated composition comprises styrene and acrylonitrile, such as where styrene and acrylonitrile are present in a weight ratio of styrene to acrylonitrile (S:AN) of 80:20 to 20:80 or 75:25 to 25:75.
Clause 63. The PMPO of clause 61 or clause 62, wherein the sum of the amount of styrene and acrylonitrile is 90 to 99.9% by weight, 95 to 99.9% by weight, 95 to 99% by weight, or 97 to 99% by weight, based on the total weight of the ethylenically unsaturated composition.
Clause 64. The PMPO of one of clause 48 to clause 63, wherein a reaction mixture to produce the PMPO further comprises a pre-formed stabilizer.
Clause 65. The PMPO of clause 64, wherein the pre-formed stabilizer comprises a reaction product of a reaction mixture comprising: (a) a macromer that contains reactive unsaturation, (b) an ethylenically unsaturated compound, (c) a free radical initiator, (d) a polymer control agent; and, optionally, (e) a chain transfer agent.
Clause 66. The PMPO of clause 65, wherein the macromer comprises a reaction product of a reaction mixture comprising: (i) an H-functional starter having a functionality of 2 to 8 and a hydroxyl number of 20 to 50 mg KOH/g polyol; (ii) 0.1 to 3% by weight, based on 100% by weight of the sum of components (i), (ii) and (iii), of a hydroxyl-reactive compound that contains reactive unsaturation; and (iii) 0 to 3% by weight, 0.05 to 2.5% by weight, or 0.1 to 1.5% by weight, based on 100% by weight of the sum of components (i), (ii) and (iii), of a diisocyanate.
Clause 67. The PMPO of clause 66, wherein the H-functional starter having a functionality of 2 to 8 and a hydroxyl number of 20 to 50 mg KOH/g polyol has a functionality of 3 to 6 and/or a hydroxyl number of 25 to 40 mg KOH/g polyol.
Clause 68. The PMPO of clause 66 or clause 67, wherein the H-functional starter having a functionality of 2 to 8 and a hydroxyl number of 20 to 50 mg KOH/g polyol is an alkylene oxide adduct of a hydroxyl functional compound.
Clause 69. The PMPO of one of clause 66 to clause 68, wherein the hydroxyl-reactive compound that contains reactive unsaturation comprises methyl methacrylate, ethyl methacrylate, maleic anhydride, isopropenyl dimethyl benzyl isocyanate, 2-isocyanatoethyl methacrylate, an adduct of isophorone diisocyanate and 2-hydroxyethyl methacrylate, an adduct of toluenediisocyanate and 2-hydroxypropyl acrylate, or a combination of any two or more thereof.
Clause 70. The PMPO of one of clause 66 to clause 69, wherein the diisocyanate comprises a diphenylmethane diisocyanate; such as a mixture of 2,4'-diphenylmethane diisocyanate, 4,4'-diphenylmethane diisocyanate and/or 2,2'-diphenyl-methane diisocyanate; toluenediisocyanate; isophoronediisocyanate; hexamethylenediisocyanate; 4,4'-methylenebis(cyclohexyl isocyanate); or a combination of any two or more thereof.
Clause 71. The PMPO of one of clause 66 to clause 70, wherein the macromer is present in an amount of 10 to 40% by weight or 15 to 35% by weight, based on the total weight of the reaction mixture used to produce the pre-formed stabilizer.
Clause 72. The PMPO of one of clause 66 to clause 71, wherein the ethylenically unsaturated compound used to form the pre-formed stabilizer comprises acrylonitrile and styrene in which acrylonitrile is used in an amount of 20 to 80% by weight or 30 to 70% by weight, based on the total weight of the monomer mixture, and styrene is used in an amount of 80 to 20% by weight or 70 to 30% by weight percent, based on the total weight of the monomer mixture, such as where the ethylenically unsaturated composition used to make the pre-formed stabilizer consists of only monofunctional monomers, such as styrene and/or acrylonitrile.
Clause 73. The PMPO of one of clause 66 to clause 72, wherein the ethylenically unsaturated compound is used in an amount of 10 to 30% by weight or 15 to 25% by weight, based on the total weight of the reaction mixture used to produce the pre-formed stabilizer.
Clause 74. The PMPO of one of clause 66 to clause 73, wherein the free radical initiator used to produce the pre-formed stabilizer comprises a peroxide, a persulfate, a perborate, a percarbonate, an azo compound, or a combination of any two or more thereof, such as where the free radical initiator is present in an amount of 0.01 to 2% by weight, 0.05 to 1% by weight or 0.05 to 0.3% by weight, based on the total weight of the reaction mixture used to produce the pre-formed stabilizer.
Clause 75. The PMPO of one of clause 66 to clause 74, wherein the polymer control agent comprises a mono-ol, an aromatic hydrocarbons, an ether, or a combination of any two or more thereof, such as where the polymer control agent is present in an amount of 30 to 80% by weight or 40 to 70% by weight, based on the total weight of the reaction mixture used to produce the pre-formed stabilizer.
Clause 76. The PMPO of one of clause 66 to clause 75, wherein the chain transfer agent comprises an alkylene oxide adduct having a hydroxyl functionality of greater 3, such as where the chain transfer agent is present in an amount of 0 to 40% by weight, 0 to 20% by weight, or 0 to 10% by weight, based on the total weight of the reaction mixture used to produce the pre-formed stabilizer.
Clause 77. The PMPO of one of clause 48 to clause 76, wherein a reaction mixture used to produce the PMPO comprises a free radical initiator, such as where the free-radical initiator is present in the reaction mixture used to produce the PMPO in an amount of 0.01 to 2% by weight, based on 100% by weight of the final PMPO.
Clause 78. The PMPO of one of clause 48 to clause 77, wherein a reaction mixture used to produce the PMPO comprises a chain transfer agent, such as where the chain transfer agent comprises a mercaptan, such as dodecane thiol, ethane thiol, octane thiol, and toluene thiol, a halogenated hydrocarbon, such as carbon tetrachloride, carbon tetrabromide, and chloroform, an amine, such as diethylamine, an enol-ether, or a combination of any two or more thereof, such as where the chain transfer agent is present in an amount of 0.1 to 2% by weight or 0.2 to 1% by weight, based on the total weight of the reaction mixture used to produce the PMPO.
Clause 79. A process for producing the PMPO of one of clause 48 to clause 78, comprising: (1) providing a heterogenous mixture of the pre-formed stabilizer and, optionally, liquid diluent, in combination with the base polyol, the ethylenically unsaturated composition, and a free radical polymerization initiator; (2) feeding the mixture to a reaction zone maintained at a temperature sufficient to initiate a free radical reaction, and under sufficient pressure to maintain only liquid phases in the reaction zone; (3) maintaining the mixture in the reaction zone for a period of time sufficient to react at least a major portion of the ethylenically unsaturated composition to form a heterogenous mixture containing an enhanced PMPO, unreacted monomers and diluent; and (4) stripping the unreacted monomers and diluent from the enhanced PMPO to recover the unreacted monomers and diluent.
Clause 80. A polyurethane foam-forming composition comprising: (1) a polyisocyanate and (2) an isocyanate-reactive component comprising the PMPO of one of clause 48 to clause 78, such as where the PMPO is present in an amount of at least 20% by weight, at least 40% by weight, at least 50% by weight, or at least 60% by weight, based on total weight of polyol present in the isocyanate-reactive component.
Clause 81. The polyurethane foam-forming composition of clause 80, wherein the isocyanate-reactive component further comprises a blowing agent, such as where the blowing agent comprises a halogenated hydrocarbon, a halogenated olefin, water, liquid carbon dioxide, a low boiling solvent, such as pentane, or a mixture of any two or more thereof, such as where the blowing agent comprises, or consists of, water, such as where the blowing agent, such as water, is present in an amount of 1 to 7 parts, such as 1 to 5 parts, by weight, based on the total weight of the isocyanate-reactive component.
Clause 82. The polyurethane foam-forming composition of clause 80 or clause 81, wherein the isocyanate-reactive component further comprises a catalyst comprising diethylenetriamine, triethylenediamine, bis(2,2'-di-methylamino)ethyl ether, N,N,N',N",N"-pentamethyldiethylenetriamine, dibutyltin dilaurate, dibutyltin diacetate, stannous octoate, or a combination of any two or more thereof, such as where the catalyst is present in an amount of 0.001 to 2 parts by weight, based on the total weight of the isocyanate-reactive component.
Clause 83. The polyurethane foam-forming composition of one of clause 80 to clause 82, wherein the isocyanate-reactive component further comprises chain extender and/or cross-linking agent having a molecular weight of below 300 Da, such as where the chain extender and/or cross-linking agent comprises glycerin, pentaerythritol, ethylene glycol, sorbitol, an alkanolamine, such as monoethanolamine, diethanolamine (DEOA) and triethanolamine (TEOA), or a combination of any two or more thereof, such as where the chain extender and/or cross-linking agent is present in an amount of up to 5 parts per by weight or 0.4 to 3.5 parts by weight, based on the total weight of the isocyanate-reactive component.
Clause 84. The polyurethane foam-forming composition of one of clause 80 to clause 83, wherein the isocyanate-reactive component further comprises a surfactant, such as where the surfactant comprises a polyetherpolysiloxane.
Clause 85. The polyurethane foam-forming composition of one of clause 80 to clause 84, wherein the polyisocyanate is present in an amount sufficient to provide the polyurethane foam-forming composition with an isocyanate index of 70 to 130, 80 to 120 or 90 to 115.
Clause 86. A method of producing a polyurethane foam comprising: (a) depositing the polyurethane foam-forming composition of one of clause 80 to clause 85 onto a moving conveyor; (b) allowing the foam-forming composition to expand and rise as it moves along the conveyor to form a continuous foam slab; and (c) cutting the continuous foam slab into foam blocks.
Clause 87. A method of producing a polyurethane foam comprising: (a) pouring the polyurethane foam-forming composition of one of clause 80 to clause 85 into a container; and (b) allowing the polyurethane foam-forming composition to rise freely in the container.
Clause 88. A method of producing a polyurethane foam comprising: (a) depositing the polyurethane foam-forming composition of one of clause 80 to clause 85 into a mold; (b) closing the mold; (c) allowing the polyurethane foam-forming composition to expand and fill the mold with the polyurethane foam; and (c) removing the polyurethane foam from the mold.

The non-limiting and non-exhaustive examples that follow are intended to further describe various non-limiting and non-exhaustive embodiments without restricting the scope of the embodiments described in this specification.

### EXAMPLES

### PMPO Examples 1-5

The following components were used in the PMPO examples:
Polyol 1: A propylene oxide adduct of sorbitol containing 12% ethylene oxide as a cap with a hydroxyl number of 33 g KOH/g polyol;
Polyol 2: A propylene oxide/ethylene oxide adduct of glycerin containing a 12% ethylene oxide with a hydroxyl number of 52 mg KOH/g polyol and having a viscosity of 510 mPa·s;
Polyol 3: A propylene oxide adduct of glycerin containing 20% ethylene oxide as a cap with a hydroxyl number of 36 g KOH/g polyol and having a viscosity of about 800 mPa.s;
PCA: Isopropanol, a polymer control agent;
TMI: Isopropenyl dimethyl benzyl isocyanate (an unsaturated aliphatic isocyanate) sold as TMI^{®} by Allnex;
Isocyanate A: A monomeric MDI comprising about 42% by weight of the 4,4'-isomer of MDI, about 57% by weight of the 2,4'-isomer of MDI and the balance being the 2,2'-isomer of MDI;
DMAEM: 2-(Dimethylamino)ethyl methacrylate available from SigmaAldrich;
ZF-10: N,N,N'-trimethyl-N'-hydroxyethyl-bisamino ethylether, commercially available as Jeffcat ZF-10 from Huntsman;
Urea-Amine: 3-Dimethylaminopropyl urea, commercially available as Dabco NE-1070 from Evonik;
Initiator A: tertiary-Butylperoxy-2-ethylhexanoate available as TBPEH from United initiators;
Initiator B: tertiary-Amyl peroxypivalate, a free-radical polymerization initiator commercially available as Trigonox 125-C75 from Nouryon;
Initiator C: 1,1-di(tert-amylperoxy)cyclohexane, a free-radical polymerization initiator, commercially available as Trigonox 122-C80 from Nouryon; and
Catalyst A: Bismuth neodecanoate, commercially available under the name CosCat 83 from Vertellus.

### Test Methods

Viscosity: Dynamic viscosities are reported in mPa·s and measured on an Anton-Paar SVM 3000 viscometer at 25 °C that has been demonstrated to give equivalent results as can be generated with ASTM-D4878-15. The instrument was calibrated using mineral oil reference standards of known viscosity.

Filtration: Filterability was determined by diluting one part by weight sample (e.g. 200 grams) of polymer polyol with two parts by weight anhydrous isopropanol (e.g. 400 grams) to remove any viscosity-imposed limitations and using a fixed quantity of material relative to a fixed cross-sectional area of screen (e.g. 1 1/8 in. diameter), such that all of the polymer polyol and isopropanol solutions passes by gravity through a 150-mesh screen. The 150-mesh screen has a square mesh with average mesh opening of 105 microns and it is a "Standard Tyler" 150 square-mesh screen. The amount of sample which passed through the screen is reported in percent, and a value of 100 percent indicates that over 99 weight percent passed through the screen.

### MACROMER PREPARATON:

Macromer A: Prepared by adding Polyol 1 (2700g) and TMI (55g) to a 12L flask. Catalyst A (200ppm) was then added to the flask and the reaction mixture was stirred for 2 hours at 75°C.

Macromer B: Prepared by adding Polyol 1 (3000g), Isocyanate A (6g), and TMI (18g) to a 12L flask. Catalyst A (100ppm) was then added to the flask and the reaction mixture was stirred for 4 hours at 75°C.

### MODIFIED AMINE PREPARATION:

Amine A: Prepared by adding ZF-10 (150g), Irganox 1076 (0.16g), and Coscat 83 (0.06g) to a 1L flask with stirring and heating to 75°C. TMI (167g) was then added dropwise, keeping the temperature ≤ 85 °C. The reaction mixture was stirred at 75°C for 4 hours.

Amine B: Prepared by adding Urea-Amine (200g), Irganox 1076 (0.03g), Coscat 83 (0.09g), and toluene (300 mL) to a 2L 3-neck flask with stirring and heating to 75°C. TMI (237g) was then added dropwise, keeping the temperature ≤ 85°C. The reaction mixture was stirred at 75°C for 4 hours. Toluene was then removed under vacuum and 50°C to give the product Amine B.

### PREFORMED STABILIZER (PFS) PREPARATION:

The pre-formed stabilizer was prepared in a two-stage reaction system comprising a continuously-stirred tank reactor (CSTR) fitted with an impeller and 4 baffles (first-stage) and a plug-flow reactor (second stage). The residence time in each reactor was about 60 minutes. The reactants were pumped continuously to the reactor from feed tanks through an in-line static mixer and then through a feed tube into the reactor, which was well mixed. The temperature of the reaction mixture was controlled at 120 ± 5°C. The product from the second-stage reactor overflowed continuously through a pressure regulator designed to control the pressure in each stage at 65 psig. The product, i.e. the pre-formed stabilizer, then passed through a cooler and into a collection vessel. The preformed stabilizer formulation is disclosed in Table 1. PFS A and PFS B (using Macromers A and B, respectively) were both produced using this procedure.

**Table 1: Preformed Stabilizer Composition**

| **Component** | **PFS** |
|---|---|
| PCA type | Isopropanol |
| PCA, wt. % | 60.0% |
| Macromer, wt. % | 24.0% |
| Monomer, wt. % | 15.9% |
| Styrene/acrylonitrile ratio | 50:50 |
| Initiator A, wt. % | 0.1% |

### POLYMER POLYOL PREPARATION:

Table 2 relates to the preparation of polymer polyols of the present specification. Each polymer polyol was prepared in a two-stage reaction system comprising a continuously-stirred tank reactor (CSTR) fitted with an impeller and 4 baffles (first-stage) and a plug-flow reactor (second stage). The residence time in each reactor was about 60 minutes. The reactants were pumped continuously from feed tanks through an in-line static mixer and then through a feed tube into the reactor, which was well mixed. The temperature of the reaction mixture was controlled at 120 ± 5°C. The product from the second-stage reactor overflowed continuously through a pressure regulator designed to control the pressure in each stage at 45 psig. The product, *i.e.,* the polymer polyol, then passed through a cooler and into a collection vessel. The crude product was vacuum stripped to remove volatiles. The wt. % total polymer in the product was calculated from the concentrations of residual monomers measured in the crude polymer polyol before stripping. PMPO Example 1 is a comparative example and PMPO Examples 2-5 are inventive examples.

**Table 2. PMPO Feed Composition and Properties**

| | **PMPO Example 1** | **PMPO Example 2** | **PMPO Example 3** | **PMPO Example 4** | **PMPO Example 5** |
|---|---|---|---|---|---|
| Polyol | 2 | 2 | 2 | 2 | 2 |
| Polyol (wt.% in feed) | 46.12 | 46.13 | 46.14 | 46.13 | 46.13 |
| PFS (wt.% in feed) | 6.88 | 6.87 | 6.87 | 6.87 | 6.87 |
| Styrene (wt.% in feed) | 30.22 | 29.61 | 29.00 | 29.61 | 29.61 |
| Acrylonitrile (wt.% in feed) | 16.15 | 15.82 | 15.48 | 15.82 | 15.81 |
| DMAEM (wt% in feed) | -- | 0.93 | 1.87 | -- | -- |
| Amine A (wt% in feed) | -- | -- | -- | 0.93 | -- |
| Amine B (wt % in feed) | -- | -- | -- | -- | 0.93 |
| Initiator B (wt. % in feed) | 0.25 | 0.25 | 0.25 | 0.25 | 0.25 |
| Initiator C (wt. % in feed) | 0.02 | 0.02 | 0.02 | 0.02 | 0.02 |
| Total Polymer (wt.%) | 49.1 | 48.7 | 48.8 | 48.8 | 48.8 |
| Viscosity mPa·s @ 25°C | 5017 | 4618 | 4634 | 4812 | 4661 |
| Filterability (%) | 100 | 100 | 100 | 100 | 100 |

**Table 2 (continued)**

| | **PMPO Example 6** | **PMPO Example 7** | **PMPO Example 8** |
|---|---|---|---|
| Polyol | 3 | 3 | 3 |
| Polyol (wt.% in feed) | 49.41 | 49.42 | 49.42 |
| PFS (wt.% in feed) | 8.33 | 8.33 | 8.33 |
| Styrene (wt.% in feed) | 26.62 | 25.42 | 25.94 |
| Acrylonitrile (wt.% in feed) | 15.38 | 14.68 | 14.98 |
| DMAEM (wt% in feed) | -- | 1.88 | -- |
| Amine A (wt% in feed) | -- | -- | 1.07 |
| Amine B (wt % in feed) | -- | -- | -- |
| Initiator B (wt. % in feed) | 0.25 | 0.25 | 0.25 |
| Initiator C (wt. % in feed) | 0.015 | 0.02 | 0.015 |
| Total Polymer (wt.%) | 44.9 | 44.3 | 44.5 |
| Viscosity mPa·s @ 25°C | 5854 | 5436 | 6108 |
| Filterability (%) | 100 | 100 | 100 |

### Foam Examples 1-11

Free-rise bench scale foams were prepared using the ingredients and amounts (in parts per 100 parts by weight) set forth in Tables 3 and 4 below. The free-rise bench scale foams of Tables 3 and 4 were prepared using the following procedure. The polyols, water, silicone surfactants, amine catalysts, and any other non-isocyanate additives, except tin catalyst, were added to a cylindrical container fitted with baffles. The contents were mixed at 2400 rpm for 60 seconds with an agitator having two turbine impellers. The tin catalyst was added at this time. The mixture was then degassed for 15 seconds. After degassing, the contents were mixed at 2400 rpm for 15 seconds, during which period the isocyanate was added when about 8 seconds of mixing time remained. The mixture was then poured into a 14×14×6-inch cardboard box, where it rose freely until the reaction was complete. A batch size sufficient to give a bun at least about 6 inches high was employed. A sonar unit was located above the cardboard box that measures and records the rise profile of the foam as a function of time. The foam operator noted the time when the foam blowoff occurred. The freshly prepared bun was cured for 20 minutes in an oven at 120° C. and then allowed to cure at ambient conditions for a minimum of 1 day. The time to 97% max height, time of maximum rise rate, blowoff time, and max rise rate, in Tables 3 and 4 are derived from the sonar data.

In Table 3, Foam Example 1 is a comparative example and Foam Examples 2-5 are inventive examples. In Table 4, Foam Example 6 is a comparative example and Foam Examples 7-11 are inventive examples.

**Table 3**

| Ingredient | Foam Example 1 | Foam Example 2 | Foam Example 3 | Foam Example 4 | Foam Example 5 |
|---|---|---|---|---|---|
| Polyol¹ | 60.00 | 60.00 | 60.00 | 60.00 | 60.00 |
| PMPO Example 1 | 40.00 | -- | -- | -- | -- |
| PMPO Example 2 | -- | 40.00 | 40.00 | -- | -- |
| PMPO Example 3 | -- | -- | -- | 40.00 | 40.00 |
| Distilled Water | 3.00 | 3.00 | 3.00 | 3.00 | 3.00 |
| Surfactant² | 1.00 | 1.00 | 1.00 | 1.00 | 1.00 |
| Catalyst #1³ | 0.030 | 0.030 | 0.025 | 0.030 | 0.025 |
| Catalyst #2⁴ | 0.08 | 0.08 | 0.08 | 0.08 | 0.08 |
| Catalyst #3⁵ | 0.21 | 0.21 | 0.21 | 0.21 | 0.21 |
| Isocyanate⁶ | 39.41 | 39.41 | 39.41 | 39.41 | 39.41 |
| Isocyanate Index | 110.00 | 110.00 | 110.00 | 110.00 | 110.00 |

| Results | | | | | |
|---|---|---|---|---|---|
| Time to 97% max height (s) | 95 | 89 | 96 | 96 | 95 |
| Maximum rise rate (in/s) | 0.115 | 0.123 | 0.118 | 0.122 | 0.119 |
| Time of max rise rate (s) | 52 | 45 | 53 | 49 | 52 |
| Blowoff time (s) | 98 | 95 | 100 | 96 | 98 |

| | | | | | |
|---|---|---|---|---|---|
| ¹ A 3,000 molecular weight triol commercially available from Covestro as Arcol^{®} F-3040. ² An alkyl-pendant type organosilicone commercially available from Momentive as Niax^{™} Silicone L-620. ³ 70% by weight bis[2-dimethylaminoethyl]ether in 30% dipropylene glycol, commercially available from Momentive as Niax^{™} A-1. ⁴ triethylenediamine catalyst commercially available from Evonik as Dabco^{®} 33 LV. ⁵ stannous octoate- based catalyst commercially available from Evonik as Dabco^{®} T-9. ⁶ aromatic diisocyanate mixture of 2,4 and 2,6 toluene diisocyanate (TDI) isomers in the ratio of 80/20 commercially available from Covestro as Mondur^{®} TD-80. | | | | | |

**Table 4**

| Ingredient | Foam Example 6 | Foam Example 7 | Foam Example 8 | Foam Example 9 | Foam Example 10 | Foam Example 11 |
|---|---|---|---|---|---|---|
| Polyol¹ | 60.00 | 60.00 | 60.00 | 60.00 | 60.00 | 60.00 |
| PMPO Example 1 | 40.00 | -- | -- | -- | -- | -- |
| PMPO Example 5 | -- | 40.00 | 40.00 | 40.00 | -- | -- |
| PMPO Example 4 | -- | -- | -- | -- | 40.00 | 40.00 |
| Distilled Water | 3.00 | 3.00 | 3.00 | 3.00 | 3.00 | 3.00 |
| Surfactant² | 1.00 | 1.00 | 1.00 | 1.00 | 1.00 | 1.00 |
| Catalyst #1³ | 0.030 | 0.030 | 0.023 | 0.010 | 0.030 | 0.010 |
| Catalyst #2⁴ | 0.08 | 0.08 | 0.08 | 0.08 | 0.08 | 0.08 |
| Catalyst #3⁵ | 0.21 | 0.21 | 0.21 | 0.21 | 0.21 | 0.21 |
| Isocyanate⁶ | 39.41 | 39.41 | 39.41 | 39.40 | 39.41 | 39.40 |
| Isocyanate Index | 110.00 | 110.00 | 110.00 | 110.00 | 110.00 | 110.00 |

| Results | | | | | | |
|---|---|---|---|---|---|---|
| Time to 97% max height (s) | 102 | 87 | 88 | 98 | 88 | 98 |
| Maximum rise rate (in/s) | 0.108 | 0.122 | 0.123 | 0.110 | 0.123 | 0.112 |
| Time of max rise rate (s) | 60 | 50 | 42 | 54 | 37 | 49 |
| Blowoff time (s) | 102 | 91 | 93 | 100 | 92 | 101 |

The time to 97% max height, time of maximum rise rate, blowoff time, and max rise rate, are indications of reactivity. Lower time values for the first three indicates increased reactivity. The higher the value of max rise rate the greater the reactivity. In Table 3, Foam Example 1 used comparative PMPO Example 1. Foam Example 2 used PMPO Example 2 and, with otherwise the same formulation as Foam Example 1, all the reactivity times were faster. In Foam Example 3, which used the same content of PMPO Example 2 as Foam Example 2, the content of Catalyst #1 in the formulation was lowered from 0.03 php to 0.025 php and the foam reactivity was comparable to Foam Example 1. In Foam Examples 4 and 5 (which were similar to Foam Examples 2 and 3 respectively except that PMPO Example 3 was used instead of PMPO Example 2), the results indicated faster reactivity relative to Foam Example 1 and comparable reactivity to Foam Examples 2 and 3 respectively.

In Table 4, Foam Example 6 used comparative PMPO Example 1. Foam Example 7 used PMPO Example 5 and, with otherwise the same formulation as Foam Example 6, all the reactivity times were faster. In Foam Example 8, the content of PMPO Example 5 remained the same as Foam Example 7 but the content of Catalyst #1 was lowered from 0.03 php to 0.023 php and all the reactivity times were still faster than Foam Example 6. In Foam Example 9, the content of PMPO Example 5 remained the same but the content of Catalyst #1 was lowered from 0.03 php to 0.01 php and reactivity was comparable to Foam Example 6. Foam Example 10 used PMPO Example 4 (containing about 1 wt% of Amine A) and, with otherwise the same formulation as Foam Example 6, all the reactivity times were faster. In Foam Example 11, which used the same content of PMPO Example 4 as Foam Example 10, the content of Catalyst #1 was lowered from 0.03 php to 0.01 php and the foam reactivity was comparable to Foam Example 1.

### Foam Examples 12-23

Free-rise bench scale molded foam formulations were prepared using the ingredients and amounts (in parts per 100 parts by weight) set forth in Tables 5 were prepared using the following procedure. The polyols, water, silicone surfactants, amine catalysts and any other non-isocyanate additives were added to a cylindrical container fitted with baffles. The contents were mixed at 4000 rpm for 55 seconds with an agitator having two turbine impellers. The mixture was then degassed for 60 seconds. After degassing, the isocyanate was added to the container and the contents were mixed at 4000 rpm for an additional 5 seconds. The mixture was then poured into a 5-gallon, 13.5 inches tall x 12 inch diameter cylindrical container, where it rose freely until the reaction was complete. A batch size sufficient to give a bun at least about 16 inches high was employed. A sonar unit was located above the 5-gallon container that measures and records the rise profile of the foam as a function of time. The freshly prepared bun was allowed to cure at ambient conditions for a minimum of 1 day. The time to max height, time of maximum rise rate and max rise rate in Table 1 are derived from the sonar data.

In Table 5, Foam Examples 12, 15, 18, and 21 are comparative examples and Foam Examples 13-14, 16-17, 19-20, and 22-23 are inventive examples.

**Table 5**

| Ingredient | Foam Ex. 12 | Foam Ex. 13 | Foam Ex. 14 | Foam Ex. 15 | Foam Ex. 16 | Foam Ex. 17 |
|---|---|---|---|---|---|---|
| Polyol¹¹ | 40 | 40 | 40 | 40 | 40 | 40 |
| PMPO 6¹⁰ | 60 | -- | -- | 60 | -- | -- |
| PMPO Example 7 | -- | 60 | -- | -- | 60 | -- |
| PMPO Example 8 | -- | -- | 60 | -- | -- | 60 |
| Surfactant⁷ | 1 | 1 | 1 | 1 | 1 | 1 |
| Distilled Water | 3.35 | 3.35 | 3.35 | 3.35 | 3.35 | 3.35 |
| Crosslinker⁸ | 1 | 1 | 1 | 1 | 1 | 1 |
| Catalyst #1³ | 0.08 | 0.08 | 0.08 | 0.06 | 0.06 | 0.06 |
| Catalyst #4⁹ | 0.32 | 0.32 | 0.32 | 0.24 | 0.24 | 0.24 |
| Isocyanate⁶ | 38.05 | 38.05 | 38.05 | 37.97 | 37.97 | 37.97 |
| Isocyanate Index | 95 | 95 | 95 | 95 | 95 | 95 |
| Total Catalyst Added | 0.40 | 0.40 | 0.40 | 0.30 | 0.30 | 0.30 |
| Results | | | | | | |
| Time to 97% max height (s) | 81.7 | 73.6 | 68.1 | 98.8 | 91.7 | 81.1 |
| Maximum rise rate (in/s) | 0.46 | 0.48 | 0.49 | 0.38 | 0.40 | 0.44 |
| Time of max rise rate (s) | 14.0 | 17.6 | 14.7 | 19.8 | 18.7 | 15.3 |

| | | | | | | |
|---|---|---|---|---|---|---|
| ⁷ VORASURF^{™} DC 5043, commercially available from Dow ⁸ DEOA-LF, 85% diethanolamine solution in 15% water ⁹ Niax A-33, 33% by weight triethylenediamine in 67% by weight dipropylene glycol, commercially available from Momentive ¹⁰ A commercial PMPO of the type described by PMPO Example 6. ¹¹ A glycerin and sorbitol started polyether polyol containing about 81 to 82% of propylene oxide internal block and about 17 to 18% of ethylene oxide cap, having an OH number of about 31.5 and a viscosity of 1100 mPa·s. | | | | | | |

**Table 5 (continued)**

| Ingredient | Foam Ex. 18 | Foam Ex. 19 | Foam Ex. 20 | Foam Ex. 21 | Foam Ex. 22 | Foam Ex. 23 |
|---|---|---|---|---|---|---|
| Polyol¹¹ | 40 | 40 | 40 | 40 | 40 | 40 |
| PMPO 6¹⁰ | 60 | -- | -- | 60 | -- | -- |
| PMPO Example 7 | -- | 60 | -- | -- | 60 | -- |
| PMPO Example 8 | -- | -- | 60 | -- | -- | 60 |
| Surfactant⁷ | 1 | 1 | 1 | 1 | 1 | 1 |
| Distilled Water | 3.35 | 3.35 | 3.35 | 3.35 | 3.35 | 3.35 |
| Crosslinker⁸ | 1 | 1 | 1 | 1 | 1 | 1 |
| Catalyst #1³ | 0.04 | 0.04 | 0.04 | 0.024 | 0.024 | 0.024 |
| Catalyst #4⁹ | 0.16 | 0.16 | 0.16 | 0.096 | 0.096 | 0.096 |
| Isocyanate⁶ | 37.96 | 37.96 | 37.96 | 37.90 | 37.90 | 37.90 |
| Isocyanate Index | 95 | 95 | 95 | 95 | 95 | 95 |
| Total Catalyst Added | 0.20 | 0.20 | 0.20 | 0.12 | 0.12 | 0.12 |

| Results | | | | | | |
|---|---|---|---|---|---|---|
| Time to 97% max height (s) | 132.5 | 93.47 | 102.8 | 145.9 | 122.9 | 116.8 |
| Maximum rise rate (in/s) | 0.29 | 0.31 | 0.34 | 0.20 | 0.22 | 0.28 |
| Time of max rise rate (s) | 25.5 | 25.1 | 25.0 | 41.5 | 39.0 | 28.9 |

The time to max 97% height, time of maximum rise rate and max rise rate are all indications of reactivity. Lower time values for the first two parameters indicates increased reactivity. The higher the value of max rise rate the more reactive the foam formulation. In Table 5, the "Total Added Catalyst (pphp)" refers to the sum of the amount of Catalyst #1 and Catalyst #4 used in the formulation. The Total Added Catalyst amounts varied from 0.12 pphp to 0.40 pphp.

Foam Example 12 used comparative PMPO 6, 0.08 pphp of Catalyst #1 and 0.40 pphp Total Added Catalyst in the formulation. Foam Example 13 used inventive PMPO Example 7 in place of comparative PMPO 6 and with otherwise the same formulation as foam Example 12 all the reactivity times were faster with a higher max rise rate. Foam Example 14 used inventive PMPO Example 8 in place of comparative PMPO 6 and with otherwise the same formulation as Foam Example 12 all the reactivity times were faster with a higher max rise rate.

In Foam Examples 15-17, the "Total Added Catalyst (pphp)" level was 75% of that of Foam Examples 12-14. Foam Example 15 used comparative PMPO 6, 0.06 pphp of Catalyst #1 and 0.30 pphp Total Added Catalyst in the formulation. Foam Example 16 used inventive PMPO Example 7 and with otherwise the same formulation as Foam Example 15 all the reactivity times were faster with a higher max rise rate. Foam Example 17 used inventive PMPO Example 8 and with otherwise the same formulation as Foam Example 15 all the reactivity times were faster with a higher max rise rate.

In Foam Examples 18-20, the "Total Added Catalyst (pphp)" level was 50% of that of Foam Examples 12-14. Foam Example 18 used comparative PMPO 6, 0.04 pphp of Catalyst #1 and 0.20 pphp Total Added Catalyst in the formulation. Foam Example 19 used inventive PMPO Example 7 and with otherwise the same formulation as Foam Example 18 all the reactivity times were faster with a higher max rise rate. Foam Example 20 used inventive PMPO Example 8 and otherwise with the same formulation as Foam Example 18 all the reactivity times were faster with a higher max rise rate.

In Foam Examples 21-23, the "Total Added Catalyst (pphp)" 30% of that of Foam Examples 12-14. Foam Example 21 used a comparative PMPO 6, 0.024 pphp of Catalyst #1 and 0.12 pphp Total Added Catalyst in the formulation. Foam Example 22 used inventive PMPO Example 7 and with otherwise the same formulation as Foam Example 21 all the reactivity times were faster with a higher max rise rate. Foam Example 23 used inventive PMPO Example 8 and with otherwise the same formulation as Foam Example 21 all the reactivity times were faster with a higher max rise rate.

A linear relationship between max rise rate and Total Added Catalyst loading in the formulations were determined for Foam Examples 12-23. This analysis was performed by setting the Max Rise Rate as dependent on the total added catalyst, as shown in Figure 1. As seen in Table 7, which refers to the linear fits of Figure 1, each linear fit had a positive slope and a coefficient of determination R² at least 0.98 indicating a positive correlation with good agreement between the Total Added Catalyst and the responding Max Rise Rate.

**Table 7**

| Linear Fit Line # (from Figure 1) | Fit Equation | Coefficient of Determination |
|---|---|---|
| (1) | Y = 0.9221*Xa + 0.09736 | R² = 0.99 |
| (2) | Y = 0.9221*Xb + 0.1174 | R² = 0.99 |
| (3) | Y = 0.7754*Xc + 0.1898 | R² = 0.98 |

As is apparent in Figure 1, the linear fits of the Max Rise Rate of Foam Examples using inventive PMPO Examples 7 and 8 are above the Foam Examples using the comparative PMPO 6 indicating a higher max rise rate when the inventive PMPO Examples were used in place of comparative PMPO 6 at an equivalent total added catalyst loading.

The total added catalyst levels were then applied to the linear fit equation of Linear Fit Line (1) to determine a calculated max rise rate (Y). Results are in Table 8.

**Table 8**

| Total Added Catalyst (pphp) | Max Rise Rate (in/sec) according to Linear Fit Line (1) |
|---|---|
| 0.40 | 0.466 |
| 0.30 | 0.374 |
| 0.20 | 0.282 |
| 0.12 | 0.208 |

The resulting Max Rise Rate at each catalyst level from Table 8 was then applied to the corresponding linear fit equations for Linear Fit Line (2) and Linear Fit Line (3) to determine the Total Added Catalyst level needed for foams using inventive PMPO Examples 7 and 8 relative to foam using comparative PMPO 6. The percent reduction of total added catalyst needed to reach an equivalent max rise rate was then calculated. Results are in Table 9. The percent reduction in catalyst loading was the most pronounced using PMPO Example 8 with the highest % reduction in catalyst loading apparent at the lowest equivalent Max Rise Rate.

**Table 9**

| Linear Fit Line # (from Figure 1) | Max Rise Rate (in/sec) | Calculated Total Added Catalyst (pphp) to Obtain Max Rise Rate | Calculated % Reduction of Total Added Catalyst |
|---|---|---|---|
| (2) | 0.466 | 0.378 | 6% |
| | 0.374 | 0.278 | 7% |
| | 0.282 | 0.178 | 11% |
| | 0.208 | 0.098 | 18% |
| (3) | 0.466 | 0.356 | 11% |
| | 0.374 | 0.238 | 21% |
| | 0.282 | 0.119 | 41% |
| | 0.208 | 0.023 | 81% |

A linear relationship between Max Rise Rate and the Catalyst #1 loading in the formulations was determined for formulations containing inventive PMPO Examples 7 and 8 vs. the formulations using comparative PMPO 6. This analysis was performed by setting the Max Rise rate as dependent on the Catalyst #1 level, as shown in Figure 2. As seen in Table 10, which refers to the linear fits of Figure 2, each linear fit had a positive slope and a coefficient of determination R² at least 0.98 indicating a positive correlation with good agreement between the Catalyst #1 level and the responding Max Rise Rate.

**Table 10**

| Linear Fit Line # (from Figure 2) | Fit Equation | Coefficient of Determination |
|---|---|---|
| (4) | Y = 4.611*Xd + 0.09736 | R² = 0.99 |
| (5) | Y = 4.611*Xe + 0.1174 | R² = 0.99 |
| (6) | Y = 3.877*Xf + 0.1898 | R² = 0.98 |

As is apparent in Figure 2, the linear fits of the Max Rise Rate of Foam Examples using inventive PMPO Examples 7 and 8 are above the Foam Examples using the comparative PMPO 6 indicating a higher Max Rise Rate when the inventive PMPO Examples were used in place of comparative PMPO 6 at an equivalent Catalyst #1 level.

The Catalyst #1 levels were then applied to the linear fit equation of Linear Fit Line (4) to determine a calculated max rise rate (Y). Results are in Table 11.

**Table 11**

| Catalyst#1 (pphp) | Max Rise Rate (in/sec) according to Linear Fit Line (4) |
|---|---|
| 0.08 | 0.466 |
| 0.06 | 0.374 |
| 0.04 | 0.282 |
| 0.024 | 0.208 |

The resulting Max Rise Rate at each Catalyst #1 level from Table 11 was then applied to the corresponding linear fit equations for Linear Fit Line (5) and Linear Fit Line (6) to determine the Catalyst #1 level needed for foams using inventive PMPO Examples 7 and 8 relative to foam using comparative PMPO 6. The percent reduction of Catalyst 1 needed to reach an equivalent max rise rate was then calculated. Results are in Table 12. The percent reduction in catalyst loading was the most pronounced using PMPO Example 8 with the highest % reduction in catalyst loading apparent at the lowest equivalent Max Rise Rate.

**Table 12**

| Linear Fit Line # (from Figure 2) | Max Rise Rate (in/sec) | Calculated Catalyst #1 (pphp) to Obtain Max Rise Rate | Calculated % Reduction of Catalyst #1 |
|---|---|---|---|
| (5) | 0.466 | 0.076 | 5% |
| | 0.374 | 0.056 | 7% |
| | 0.282 | 0.036 | 10% |
| | 0.208 | 0.020 | 17% |
| (6) | 0.466 | 0.071 | 11% |
| | 0.374 | 0.048 | 20% |
| | 0.282 | 0.024 | 40% |
| | 0.208 | 0.005 | 79% |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A polymer polyol (PMPO) comprising:
(a) a base polyol having a hydroxyl functionality of 2 to 8 and an OH number of 20 to 400 mg KOH/g polyol; and
(b) polymer particles dispersed in the base polyol,
wherein the polymer particles comprise a reaction product of a reaction mixture comprising an ethylenically unsaturated composition, the ethylenically unsaturated composition comprising an ethylenically unsaturated compound of general structure (I):
Y-X-Z (I)
in which: (1) Y represents a moiety that comprises ethylenic unsaturation; (2) X represents oxygen or NH; and (3) Z represents a (cyclo)aliphatic moiety that comprises a tertiary amino group.

2. The PMPO of claim 1, wherein Y in structure (I) is 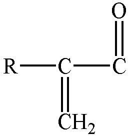 in which R is hydrogen or CH₃.

3. The PMPO of claim 1 or claim 2, wherein Z in structure (I) is 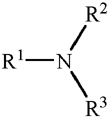 in which R¹ is C₁-C₆ alkylene and R² and R³, which may be the same or different, are each C₁-C₆ alkyl.

4. The PMPO of one of claim 1 to claim 3, wherein the ethylenically unsaturated compound of general structure (I) is of structure (II): 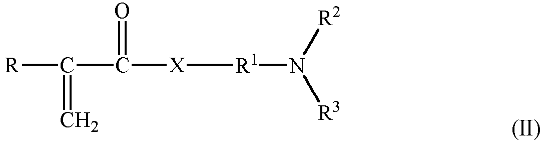 in which:
(1) R is hydrogen or CH₃;
(2) X is O or NH;
(3) R¹ is C₁-C₆ alkylene; and
(4) R² and R³, which may be the same or different, are each C₁-C₆ alkyl.

5. The PMPO of claim 4, wherein the ethylenically unsaturated compound of structure (II) comprises dimethylaminoethylmethacrylate, dimethylaminopropylmethacrylamide, or a combination thereof.

6. The PMPO of one of claim 1 to claim 3, wherein Z in structure (I) further comprises an ether linkage and/or a secondary amine group.

7. The PMPO of claim 6, wherein the ethylenically unsaturated compound of structure (I) comprises a reaction product of reactants comprising:
(i) a hydroxyl and/or primary amine-containing (cyclo)aliphatic compound having at least one tertiary amino group; and
(ii) an ethylenically unsaturated compound comprising at least one group reactive with a hydroxyl and/or primary amine group of (i).

8. The PMPO of claim 7, wherein the hydroxyl and/or primary amine-containing (cyclo)aliphatic compound having at least one tertiary amino group comprises a compound of structure (III): 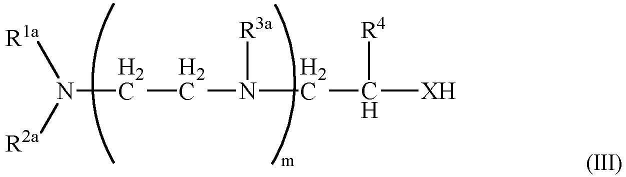 in which:
(1) R^{1a}, R^{2a}, and R^{3a}, which may be the same or different, are each a linear or branched alkyl group;
(2) R⁴ is hydrogen or CH₃;
(3) m is an integer having a value of 1 to 3; and
(4) X is oxygen or nitrogen; or
a compound of structure (IV): 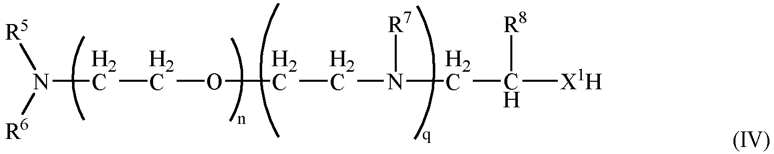 in which:
(1) R⁵, R⁶, and R⁷, which may be the same or different, are each a linear or branched alkyl group, such as a linear or branched C₁ to C₄ alkyl group;
(2) R⁸ is hydrogen or CH₃;
(3) n and q, which may be the same or different, are each an integer having a value of 1 to 3; and
(4) X¹ is oxygen or nitrogen; or
a combination of a compound of structure (III) and a compound of structure (IV).

9. The PMPO of claim 8, wherein the hydroxyl and/or primary amine-containing (cyclo)aliphatic compound having at least one tertiary amino group comprises a compound of structure (IV) in which R⁵, R⁶, and R⁷ are CH₃, R⁸ is hydrogen, X¹ is oxygen, n is 1, and q is 1.

10. The PMPO of claim 8, wherein the hydroxyl and/or primary amine-containing (cyclo)aliphatic compound having at least one tertiary amino group comprises: 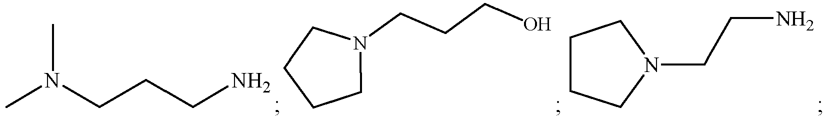 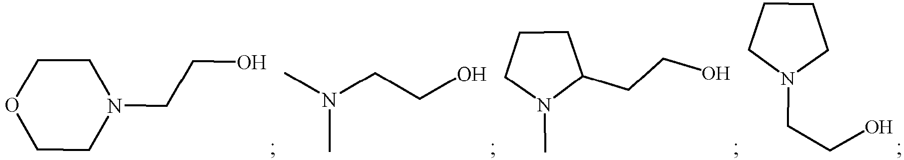 or a combination of any two or more thereof.

11. The PMPO of one of claim 7 to claim 10, wherein the ethylenically unsaturated compound comprising at least one group reactive with the hydroxyl and/or primary amine group of (i) comprises an isocyanate-functional ethylenically unsaturated compound, an oxirane-functional ethylenically unsaturated compound, an ethylenically unsaturated carboxylic acid anhydride, or a combination of any two or more thereof.

12. The PMPO of claim 11, wherein the ethylenically unsaturated compound comprises an isocyanate-functional ethylenically unsaturated compound.

13. The PMPO of claim 12, wherein the isocyanate-functional ethylenically unsaturated compound comprises 3-isopropenyl-α,α-dimethylbenzyl-isocyanate.

14. The PMPO of one of claim 1 to claim 13, wherein the ethylenically unsaturated compound of structure (I) is present in an amount of 0.1 to 10% by weight, based on total weight of the ethylenically unsaturated composition.

15. The PMPO of claim 14, wherein the ethylenically unsaturated composition further comprises styrene and acrylonitrile that are present in a weight ratio of styrene to acrylonitrile (S:AN) of 80:20 to 20:80.
